# EUROPÄISCHE PATENTSCHRIFT

(11) **EP 2 592 056 B1**
(45) Veröffentlichungstag und Bekanntmachung des Hinweises auf die Patenterteilung: **12.05.2021**
(21) Anmeldenummer: 12187797.1
(22) Anmeldetag: 09.10.2012
(51) Int. Cl.: C03C 8/02, C03C 8/04, C03C 8/16, F24C 15/10, C03C 1/00, C03C 3/093, C03C 8/14, C03C 17/00

(54) **Beschichtetes Glas- oder Glaskeramik-Substrat mit haptischen Eigenschaften**
Coated glass or glass ceramic substrate with haptic characteristics
Substrat en verre ou vitrocéramique revêtu avec propriétés tactiles

(30) Priorität: 10.10.2011 DE 102011115379
(43) Veröffentlichungstag der Anmeldung: 15.05.2013
(73) Patentinhaber: Schott AG, 55122 Mainz (DE)
(72) Erfinder: Anton, Andrea, 55595 Hüffelsheim (DE); Milanovska, Angelina, 55120 Mainz (DE); Dörk, Birgit, 55128 Mainz (DE); Bockmeyer, Matthias, 55118 Mainz (DE); Rebsamen, Sven, 67822 Münsterappel (DE)
(74) Vertreter: Blumbach · Zinngrebe Patentanwälte PartG mbB

(56) Entgegenhaltungen:
- EP-A2- 1 876 394
- WO-A1-01/74739
- DE-U1-202009 000 139
- JP-A- 2001 328 846
- JP-A- 2005 049 050
- US-A- 3 354 022
- US-A1- 2006 024 493

## Beschreibung

Die Erfindung betrifft allgemein Glas- oder Glaskeramik-Artikel. Insbesondere betrifft die Erfindung einen solchen Artikel, der mit einer haptisch fühlbaren Oberfläche versehen ist. Die Erfindung betrifft auch eine Glasfritte zum Erzeugen temperaturbeständiger Schichten, welche auf die Oberflächen von Substraten aufgebracht werden können, wobei die Schichten bestimmte haptische Eigenschaften aufweisen können. Des Weiteren betrifft die Erfindung ein Verfahren zur Herstellung derartiger Schichten. Die Substrate können verschiedene Materialien umfassen, insbesondere aus Glas oder Glaskeramik, und beispielsweise im Haushaltsgeräte- oder im Displaybereich verwendet werden.

In vielfältiger Weise kommen im Haushaltsgeräte- oder im Displaybereich Substrate aus Glas oder Glaskeramik zum Einsatz, so beispielsweise Glaskeramik-Kochfelder in Einbauherden oder auch Sichtscheiben in Türen für Gargeräte, Backöfen oder Mikrowellengeräten. In zunehmendem Maße umfassen die Substrate bzw. deren Oberflächen dabei verschiedene Teilflächen oder Bereiche, die unterschiedliche Funktionen aufweisen.

Während beispielsweise Glaskeramik-Kochfelder ursprünglich lediglich einen oder mehrere, als Kochzone ausgebildeten Bereich umfassten, so können sie heute neben diesen Kochzonen-Bereichen auch Teilflächen umfassen, die der Bedienung der Geräte zuzuordnen sind. Bisher waren die verschiedenen Teilflächen oder Bereiche überwiegend optisch zu erkennen. Inzwischen kommt auch der haptischen Wahrnehmung der unterschiedlichen Funktionen eine immer größere Bedeutung zu.

Die haptische Wahrnehmung umfasst dabei insbesondere das aktive Erfühlen von bestimmten Bereichen, Größen, Texturen oder Konturen auf der Oberfläche eines Objektes durch das Berühren oder Ertasten. Im Dekorbereich sind haptische Eigenschaften beispielsweise von Oberflächen bekannt.

Die DE 20 2009 000 139 U1 beschreibt eine Schaltfläche, welche Positionsmarkierungen mit haptischen Eigenschaften aufweist. Ein von einem Benutzer fühlbares Relief gibt die Positionsmarkierungen wieder. Die Fertigung der Schaltfläche erfolgt durch mechanisches Bearbeiten wie das Fräsen.

Ebenso sind auch mechanische Verfahren wie das Polieren oder das Sandstrahlen bekannt. Der Einsatz mechanischer Verfahren zum Erzeugen einer Struktur mit haptischen Eigenschaften auf der Oberfläche eines Substrates ist häufig sehr kostenaufwendig. Zudem kann es leicht zu einer Schädigung der Oberfläche kommen, welche sich negativ auf die Festigkeit auswirken kann.

Die EP 1 876 394 A2 beschreibt ein Glaskeramik-Kochfeld mit einem Gleitstreifen, der zumindest teilweise eine Strukturierung aufweist, welche eine haptische Wirkung hat. Die Strukturierung wird mittels Bedrucken aufgebracht.

Die DE 10 2007 019 853 A1 beschreibt ein Verfahren zum Erzeugen dreidimensionaler bzw. haptisch wahrnehmbarer Informationen auf einem flächigen Informationsträger. Die Informationen werden drucktechnisch auf den Informationsträger aufgebracht.

Weiterhin beschreibt die WO 01/74739 A1 Glaskeramik- oder Metallsubstrate, welche mit einer mikrorauen Schicht zum Zwecke einer verbesserten Selbstreinigung auf der Oberfläche versehen sind, wobei der Selbstreinigungseffekt aufgrund der hydrophoben Eigenschaften der Oberflächenschicht bewirkt wird. Die JP 2005 049 050 A beschreibt ein Kochfeld mit einer Schicht, wobei die Schicht eingebettete Partikel aufweist. Diese Partikel sollen einem Verrutschen von auf dem Kochfeld stehendem Kochgeschirr entgegenwirken.

Das drucktechnische Aufbringen von Schichten mit haptischen Eigenschaften kann deutlich kosteneffizienter sein, weist dagegen aber den Nachteil auf, dass diese Schichten häufig nur eine geringe Temperaturbeständigkeit bzw. eine geringe mechanische Stabilität aufweisen. So besteht beispielsweise bei lokal strukturierten Schichten auf einem Glaskeramik-Kochfeld, welche drucktechnisch aus Polyurethan aufgebracht sind, die große Gefahr, dass diese bei mechanischer Beanspruchung mangels ausreichender Anbindung an das Substrat beschädigt werden können. Vorteilhaft wäre eine bessere Verbindung der Schicht mit dem Substrat, beispielsweise durch ein Verschmelzen im Fall von Substraten aus Glas oder Glaskeramik.

Weiterhin sind Verfahren zum Strukturieren von Glasoberflächen mittels Ätzprozessen bekannt, wobei eine Strukturierung häufig mittels Flusssäure erfolgt. Derartige Verfahren gelten als aufwendig und gefährlich, zudem ist die Formenvielfalt an Strukturen durch den Ätzprozess begrenzt.

Die WO 2011/085997 beschreibt ein weiteres Verfahren, bei dem auf eine Scheibe zunächst eine Sol-Gel-Schicht aufgebracht wird, in welche sodann mittels eines Prägewerkzeuges eine haptisch wahrnehmbare Struktur eingebracht wird. Anschließend wird die Sol-Gel-Schicht ausgehärtet. Auch dieses Verfahren ist aufwendig, da es neben dem Aufbringen der Schicht auch noch einen separaten Arbeitsprozeß zum Prägen erfordert.

Hieraus ergibt sich die Aufgabe der vorliegenden Erfindung, haptisch wahrnehmbare Eigenschaften einer Glas- oder Glaskeramikoberfläche einfach und variabel herstellbar zu machen.

Diese Aufgabe wird durch den Gegenstand des Anspruchs 1 gelöst. Vorteilhafte Ausgestaltungen und Weiterbildungen der Erfindung sind in den abhängigen Ansprüchen angegeben.

Demgemäß sieht die Erfindung ein beschichtetes Glas oder Glaskeramik-Substrat mit einer Schicht mit haptischen Eigenschaften vor, derart, dass die Schicht eine haptisch fühlbare Struktur aufweist, wobei die Schicht strukturgebende anorganische und oder Polysiloxan-basierte Partikel umfasst, welche mit einem Schicht-bildenden Material auf dem Substrat fixiert sind, wobei die Partikel Erhebungen auf der Schicht bewirken und damit die haptisch fühlbare Struktur hervorrufen. Dabei können die strukturgebenden Partikel teilweise aus dem Schicht-bildenden Material herausragen und/oder zumindest teilweise nicht mit Schicht-bildendem Material bedeckt sein.

Gegenüber geätzten Oberflächen bietet die Erfindung mehrere Vorteile. Zum einen ist die Oberfläche deutlich unempfindlicher gegenüber Fingerabdrücken. Auch ist die Herstellung einfacher. So ist beispielsweise kein HF-Ätzen mit Maskierung zur lokalen Strukturierung notwendig. Die Herstellung der Schicht ermöglicht eine gute Prozesskontrolle. Typischerweise sind auch die RMS-und Rₐ-Werte deutlich geringer als bei geätztem Glas. Schließlich ist Glaskeramik als Substrat auch sehr schwer zu ätzen.

Die Erfindung eignet sich unter anderem für
- mattierte Bereiche bei transparenten Kochflächen für Displays oder weiteren Lichtanwendungen,
- als Ersatz von mattierten bzw. geätzten Glasoberflächen im Küchen bzw. Hausgerätebereich,
- für Vorsatzscheiben von Backöfen, Kühlschranken etc.,
- als flüssigkeitsstoppende Beschichtung auf Kochflächen,
- als Beschichtung für Unterlagsplatten für die Keramisierung von Glaskeramik,
- als Ersatz von mattierten bzw. geätzten Glasoberflächen im Architekturbereich, bspw. für Türen, Duschkabinen, Fasadenelemente
- als Ersatz von mattierten bzw. geätzten Glasoberflächen im Automobil bzw. Luftfahrtbereich

Bei dem Schicht-bildenden Material kann es sich um eine organische und oder anorganische und/oder polysiloxanbasierte und/oder und/oder Silazanbasierte und oder Glas-basierende Schicht-bildende Matrix handeln. Im Falle eines organischen Schicht-bildenden Materials enthält dieses vorzugsweise ein Polymer, umfassend Polyurethan, Polyacrylat, Polymethacrylat, Polyvinylalkohol, Polyvinylchlorid, Polyvinylacetale, Polyvinylpyrrolidon, Polystyrol, Epoxyd, Polyolefine und Mischungen dieser Bestandteile, vorzugsweise Polyethylen, Polypropylen, Polycarbonat, Polyethylenterephthalat, perfluorierten Polymeren und Mischungen daraus.

Im Falle, dass Polysiloxanharz als Schicht-bildendes Material verwendet wird, werden Methylpolysiloxan und/oder Phenylpolysiloxan, Methylphenylpolysiloxan und/oder vinylfunktionaliertes Polysiloxanharz und/oder allyfunktionaliertes Polysiloxanharz und/oder methacrylfunktionaliertes Polysiloxanharz und/oder epoxydfunktionaliertes Polysiloxanharz, hydroylfunktionaliertes Polysiloxanharz und/oder carboxylfunktionaliertes Polysiloxanharz als Polysiloxane bevorzugt.

Eine weitere Ausführungsform der Erfindung basiert darauf, die Schicht im Sol-Gel-Verfahren herzustellen. Dazu umfasst das Schicht-bildende Material ein Sol-Gel-Material, umfassend anorganische und/oder hydridpolymere Sol-gel-Materialien.

Insbesondere für die Anwendung auf Kochfeldern oder Backofentüren, sowie anderen Glas- oder Glaskeramik-Artikeln, die im Betrieb erhöhten Temperaturen ausgesetzt sind, ist es günstig, wenn das Schicht-bildende Material eine Temperaturbeständigkeit größer 150 °C, bevorzugt größer 250 °C, ganz besonders bevorzugt größer 500 °C aufweist.

Zur Erzielung deutlicher haptischer Wirkungen ist es günstig, wenn der erkennbare Flächenbelegungsgrad von aus dem Schicht-bildenden Material herausstehenden strukturgebenden Partikel größer 5 %, bevorzugt größer 20 %, ganz besonders bevorzugt größer 30 % beträgt.

Weiterhin ist es vorteilhaft, wenn das Volumenverhältnis von Schicht-bildendem Material zu strukturgebenden Partikeln größer 0,1, bevorzugt größer 0,2, ganz besonders bevorzugt größer 0,4 beträgt. Dies sorgt für eine gute Einbettung der Partikel und damit für eine gute Haltbarkeit der haptischen Wirkung.

Insbesondere ist es günstig, das Massenverhältnis von Schicht-bildendem Material zu strukturgebenden Partikeln in einem Bereich von 20 bis 0,1, bevorzugt von 3 bis 0,25 und besonders bevorzugt von 1,8 bis 0,4 zu wählen. Wird der Anteil des Schicht-bildenden Materials größer als in den vorstehend angegebenen Bereichen, ist die haptische Wirkung geringer oder verschwindet sogar.

Um eine gleichmäßige haptisch fühlbare Eigenschaft zu erzielen, wird es weiterhin bevorzugt, dass die Menge der Partikel so gewählt wird, dass der mittlere Abstand der strukturgebenden Partikel, bezogen auf den Abstand von Partikelmittelpunkt zu Partikelmittelpunkt, kleiner als der 4 - fache, bevorzugt kleiner ist als der 2 - fache mittlere Partikeldurchmesser der strukturgebenden Partikel.

Zur Erreichung der haptischen Wirkung sind überraschend sehr dünne Schichtdicken ausreichend. So beträgt die mittlere Schichtdicke in Weiterbildung der Erfindung zwischen 0,5 - 50 µm, bevorzugt zwischen 1 - 25 µm, ganz besonders bevorzugt 2 - 10 µm.

Für die mittlere Schichtdicke der Matrix, beziehungsweise des Schicht-bildenden Materials sind an Stellen ohne strukturgebende Partikel zwischen 0,1 µm - 20 µm, bevorzugt zwischen 1 - 5 µm, ganz besonders bevorzugt 1,5 - 3 µm bereits ausreichend.

Weiterhin ist es günstig, die Partikelgröße und/oder die Schichtdicke so zu wählen, dass die mittlere Schichtdicke des Schicht-bildenden Materials immer kleiner ist als der mittlere Durchmesser der strukturgebenden Partikel, bevorzugt kleiner als 80 % des mittleren Partikeldurchmessers. Damit wird erreicht, dass die Partikel aus der Schicht herausragen und nicht vollständig so in der Schicht eingebettet werden, dass im Bereich des Partikels eine ebene Oberfläche entsteht.

Gute haptische Wirkungen werden erreicht, wenn der PV-Wert für eine Schicht mit kantenlosen kugelförmigen Partikeln zwischen 4 - 10 µm, besonders bevorzugt zwischen 6 - 10, besonders bevorzugt zwischen 7,5 und 9,5 liegt. Der PV-Wert ist die mittlere Höhendifferenz zwischen dem tiefsten Punkt zwischen zwei Partikeln und dem höchsten Punkt auf einem dieser Partikel.
Als kugelförmige oder allgemein abgerundete Partikel eignen sich insbesondere silikonbasierte, kugelförmige Partikel. Im Falle von Partikeln mit eckigen Außenkonturen, die eine eher raue Anmutung bewirken, liegt der PV-Wert bevorzugt zwischen 10 - 20 µm, besonders bevorzugt zwischen 11 - 18, insbesondere bevorzugt zwischen 12,5 - 15. Dieser etwas höhere Wert ist günstig, um gegenüber abgerundeten Partikeln, die eine eher samtige Anmutung bewirken, eine eher rauhe Anmutung zu erreichen.
Für die strukturgebenden Partikel sind als Materialien Gläser oder Polysiloxane, insbesondere SiO2, Phenylpolysiloxan, Methylpolysiloxan, Methylphenylpolysiloxan, organisch funktionalisierte Polysiloxane, alkaliarme Borosilikat- und/oder Alkali-Alumo-Silikatgläser geeignet.

Neben dem Schicht-bildenden Material und den die haptische Anmutung verursachenden Partikeln können außerdem vorteilhaft noch anorganische und oder organische Füllstoffe und/oder Pigmente enthalten sein. Als Pigmente, Farbstoffe, Füll- oder Zusatzstoffe sind besonders TiO₂, allgemein Spinelle, vorzugsweise dabei CrCu-Spinelle, Fe-Spinelle, Glimmer und glimmerbasierte Effektpigmente geeignet.

Um flexible und hinreichend feste und die Partikel fest einbindende Schichten zu erhalten, wird es bevorzugt, dass der Massenanteil der zusätzlichen Pigmente, Füll- oder Zusatzstoffe an der Gesamtmasse des die strukturgebenden Partikel bindenden Schicht-bildenden Materials 0 bis 60 Gew.-%, vorzugsweise 1 bis 60 Gew.-% bevorzugt 3 bis 40 Gew.-% und besonders bevorzugt 5 - 30 Gew.-% beträgt.

Mit den erfindungsgemäßen Schichten lassen sich nicht nur haptische, sondern auch optische Effekte erzielen. Vorzugsweise weist das beschichtete Substrat zumindest eine der folgenden Reflexions- und Transmissionseigenschaften auf: die Reflexion bei 550 nm liegt im Bereich von 6 - 9 % bevorzugt im Bereich von 7 - 8%. Die Transmission bei 550 nm liegt im Bereich von 75 - 85 % bevorzugt im Bereich von 80 - 85 %, besonders bevorzugt im Bereich von 81 - 83 %. Die Schicht kann transparenter Glaskeramik, oder auch Grünglas aufgetragen werden. Im letzteren Falle wird das Grünglas zur Herstellung der Glaskeramik mit der bereits aufgetragenen Schicht keramisiert.

Ebenfalls möglich ist der Auftrag der Schicht auf Kalknatronglas als Substrat und ein Einbrennen der Schicht während eines Vorspannprozesses.

Durch die Erfindung soll die Oberfläche oder ein Teilbereich der Oberfläche eines Substrates mit einer temperaturstabilen Schicht versehen werden können, wobei die erzeugte Schicht haptische Eigenschaften aufweisen soll.

Dabei soll die erzeugte Schicht verschiedene haptische Eigenschaften aufweisen können. So soll eine erzeugte Schicht beispielsweise eine Eigenschaft aufweisen, die bewirkt, daß sich die Schicht bei einem Kontakt mit der Haut samtig und leicht gleitend anfühlt, oder auch eine Eigenschaft, die bewirkt, daß sich die Schicht leicht bremsend anfühlt.

Dabei sollen auch Teilbereiche bzw. Teilflächen der Oberfläche mit unterschiedlichen haptischen Eigenschaften ausgestattet werden können.

Die erzeugte Schicht soll eine hohe chemische Beständigkeit, beispielsweise eine hohe Säurebeständigkeit, sowie eine gute Reinigbarkeit aufweisen.

Weiterhin soll die erzeugte Schicht thermisch und mechanisch stabil ausgebildet sein.

Die erzeugte Schicht soll für eine Verwendung an Oberflächen von Haushaltsgeräten oder auch für Geräte aus dem Display-Bereich geeignet sein.

Zudem soll die Schicht mittels einfacher Verfahren auf das Substrat aufgebracht werden können.

Die Erfindung betrifft weiterhin auch eine Glasfritte zum Erzeugen einer temperaturstabilen Schicht mit haptischen Eigenschaften durch ein Glasieren auf einem Substrat oder einem Teilbereich eines Substrates, wobei dass die Glasfritte glasfluß-bildende Partikel und strukturgebende Partikel umfasst.

Das Glasieren, Emaillieren oder Dekorieren zur Erzielung bestimmter Oberflächen eines Substrates ist bekannt. Hierbei können die zur Herstellung der Glasur erforderlichen Rohstoffe zu einem Glas eingeschmolzen werden, welches sodann nach dem Erschmelzen und Abkühlen aufgemahlen werden kann. Das Mahlprodukt wird auch als Glasfritte bezeichnet. Eine derartig erzeugte Glasfritte kann mit Hilfsstoffen, beispielsweise Suspendiermitteln, versetzt werden, um ein pastenartiges Material, nachfolgend als Paste bezeichnet, zu erhalten. Diese Paste kann mittels verschiedener Verfahren, beispielsweise dem Siebdruck, über ein Sol-Gel-Verfahren, oder auch über ein Sprü- oder Pinselverfahren auf die Oberfläche des Substrates appliziert werden. Eine derartig applizierte Schicht kann bei erhöhten Temperaturen, welche typischerweise unterhalb des Erweichungsbereiches des Substrates liegt, eingebrannt werden.

Die Erfinder haben ein Glas für den glasfluß-bildenden Partikel gefunden, das es ermöglicht, die Glasfritte mit temperaturstabilen strukturgebenden Partikel zu versetzen und mit dieser Glasfritte eine Paste zu erzeugen, die als Schicht auf ein Substrat appliziert werden kann und dort unterschiedliche haptische Eigenschaften bewirken kann. Vorzugsweise ist das Glas blei- und cadmiumfrei.

Das Glas weist eine hohe Biegesteifigkeit auf, insbesondere auch beim Beschichten von Substraten aus Glas oder Glaskeramik mit einem thermischen Ausdehnungskoeffizienten von kleiner als 4*10⁻⁶ / K, bevorzugt kleiner als 2*10⁻⁶ / K, in einem Temperaturbereich von 20°C und 700 °C.

Das Glas kann nach einem Einschmelzen und Abkühlen zu dem glasfluß-bildenden Partikel vermahlen werden. Vorzugsweise beträgt der mittlere Partikeldurchmesser <= 10 µm, bevorzugt <= 6 µm und besonders bevorzugt <= 4 µm.

Sodann kann der glasfluß-bildende Partikel mit strukturgebenden Partikeln versetzt werden. Vorzugsweise liegt das Massenverhältnis von glasfluß-bildenden Partikel zu strukturgebenden Partikel in einem Bereich von 20 zu 0,1, bevorzugt von 3 zu 0,25 und besonders bevorzugt von 1,8 zu 0,4.

Die strukturgebenden Partikel bewirken eine bestimmte haptische Eigenschaft der erzeugten Schicht. Unter haptischer Eigenschaft einer Schicht bzw. einer Oberfläche ist im Sinne der vorliegenden Erfindung zu verstehen, dass die Textur der Oberfläche des Substrates durch haptisches Wahrnehmen über die Integration aller Hautsinne und der Tiefensensibilität aktiv erfühlt werden kann.

Die haptische Eigenschaft der erzeugten Schicht kann durch die Außenkontur, das Material und/oder die Partikelkonzentration eingestellt werden. So kann eine Schicht mit einer samtigen haptischen Eigenschaft oder auch eine Schicht mit einer bremsenden haptischen Eigenschaft erzeugt werden.

Beispielsweise kann auf diese Weise ein Bereich einer Oberfläche eines Glaskeramik-Substrates, der mit Bedienelementen ausgestattet ist, mit einer bestimmten haptischen Eigenschaft ausgebildet werden und ein anderer Bereich desselben Substrates, der die Kochfeldzonen umfasst, mit einer anderen haptischen Eigenschaft ausgebildet werden.

Die haptische Wahrnehmung eines beschichteten Bereiches einer Oberfläche kann sich daher deutlich von einem nicht beschichteten Bereich einer Oberfläche desselben Bereiches unterscheiden.

Die strukturgebenden Partikel sind mit einer bestimmten Außenkontur ausgebildet. So sind strukturgebende Partikel mit einer kantenlosen, runden Außenkontur ausgebildet. Derartig ausgebildete Partikel bewirken in einer Schicht aufgrund ihrer abgerundeten, kantenlosen Außenkontur eine samtige Wahrnehmung. Die samtige Wahrnehmung wird hervorgerufen durch aus der applizierten Schicht hervorragenden oder vorstehenden Teile des strukturgebenden Partikels. In anderen Worten führen abgerundete Teilbereiche der strukturgebenden Partikel, welche nicht vollständig in die Schicht eingebettet sind, zu einer samtigen haptischen Wahrnehmung.

Besonders bevorzugt wird die abgerundete, kantenlose Außenkontur des strukturgebenden Partikels durch einen nachfolgenden Prozess wie beispielsweise einem Einbrennprozess nicht in seiner Außenkontur verändert. So ist beispielsweise ein Zerbrechen der abgerundeten, kantenlosen strukturgebenden Partikel zu vermeiden. Insbesondere soll der strukturgebende Partikel zur Erzeugung einer Schicht mit einer samtigen Wahrnehmung keine scharfen Kanten aufweisen, da diese Kanten nicht eine samtige Haptik bewirken.

In vorteilhafter Weise wird also die Außenkontur des strukturgebenden Partikels nicht durch die Temperatur des Einbrennvorgangs geändert, um eine Schicht mit einer samtigen Haptik zu erzeugen. Bevorzugt weist der strukturgebende Partikel daher einen Schmelzpunkt oberhalb einer Einbrenntemperatur der Schicht, beziehungsweise des Schicht-bildenden Materials auf, damit die in die Schicht eingebetteten strukturgebenden Partikel ihre Außenkontur beibehalten und auf diese Weise die samtige haptische Eigenschaft der Schicht bewirken können. Vorzugsweise liegt daher der Erweichungsbereich der strukturgebenden Partikel oberhalb von 1.000 °C.

Zur Erzeugung einer Schicht mit rauen und/oder "bremsenden" haptischen Eigenschaften können die strukturgebenden Partikel bevorzugt mit einer eckigen Außenkontur ausgebildet sein.
Derartige eckige Partikel können in einer Schicht aufgrund der Ecken und/oder Kanten eine raue Wahrnehmung bewirken.

Besonders bevorzugt weisen die strukturgebenden Partikel nach einem Einbrennen des Schicht-bildenden Materials eine Außenkontur mit Ecken oder Kanten auf. Dies kann beispielsweise erreicht werden durch Partikel mit einer kantigen und/oder eckigen Außenkontur. In überraschend einfacher Weise können aber auch kugelförmige oder kantenlose strukturgebende Partikel aus einem Material ausgewählt werden, welches einen Erweichungsbereich unterhalb der Einbrenntemperatur des Schicht-bildenden Materials aufweist.

Vorzugsweise werden hierzu strukturgebende Partikel aus Alkalialuminosilikatglas oder aus alkaliarmen Borosilikatglas ausgewählt, die eine kugelförmige oder kantenlose Außenkontur aufweisen und während des Einbrennens teilweise aufschmelzen, wobei sich Bruchstücke der Kugeln bilden. Derartige Materialien verfügen beispielsweise über einen Erweichungsbereich von TG = 620 °C bzw. 525°C. Wenn die Einbrenntemperatur oberhalb dieser Temperatur liegt, so können Bruchstücke mit Kanten oder Spitzen aus den Partikeln entstehen. Diese können aus der Oberfläche der applizierten Schicht hervorstehen. Die hervorstehenden Spitzen und Kanten der Bruchstücke der strukturgebenden Partikel können daher eine raue haptische Wahrnehmung hervorrufen.

Es können auch bevorzugt Mischungen aus runden und eckigen strukturgebenden Partikeln verwendet werden. Auf diese Weise kann die haptische Wirkung zwischen einer eher samtigen und einer eher rauen Wirkung eingestellt werden.

Die strukturgebenden Partikel weisen bevorzugt einen Durchmesser in einem Bereich von 500 nm bis 50 µm, bevorzugt 1 bis 10 µm und besonders bevorzugt von 1,5 bis 7 µm auf.
Der Anteil der strukturgebenden Partikel mit dem bevorzugten Durchmesser kann bevorzugt bei 90% der insgesamt verwendeten strukturgebenden Partikel und besonders bevorzugt bei über 95% liegen.

Zur Erzeugung einer Schicht mit haptischen Eigenschaften können die strukturgebende Partikel bevorzugt mit einer kugelförmigen und/oder kantenlosen Außenkontur ausgebildet sein.

Die strukturgebenden Partikel können bevorzugt Materialien aus der Gruppe SiO2, Polysiloxan, Methylpolysiloxan, Methylphenylpolysiloxan, organisch funktionalisierten Polysiloxan, alkaliarmen Borosilikat und/oder Alkali-Alumo-Silikatgläsern umfassen.

In einer besonderen Ausführungsform können die strukturgebenden Partikel auch Materialien aus der Gruppe der nichtoxidischen Keramiken, beispielsweise BN, SiN, MoS, TiN oder ZrN umfassen.

In einer weiteren besonderen Ausführungsform können die strukturgebenden Partikel oxidische Materialien, beispielsweise Al2O3, kristallines SiO2, ZrO2, ZrSiO4 ZnAl2O4, MgAl2O4, Y2O3, Yttrium-dotiertes ZrO2, Kalzium-dotiertes ZrO2, Magnesium-dotiertes ZrO2, TiO2, ZnO umfassen.

Die bevorzugte Partikelgröße der strukturgebenden Partikel zur Erzeugung einer Schicht mit bestimmten haptischen Eigenschaften ist für ausgewählte Materialien in der folgenden Tabelle dargestellt:

**Tabelle 1: Bevorzugte Partikelgrößen für strukturgebende Partikel**

| Material | Partikelgröße | Anteil |
|---|---|---|
| Methylpolysiloxankugeln | Durchmesser: 4 - 5 µm | |
| Methylpolysiloxankugeln (Tospearls ®) | Durchmesser: 4 - 8 µm | |
| SiO2-Kugeln | Durchmesser: 3 - 4 µm | |
| SiO2-Kugeln | Durchmesser: 3 - 7 µm | |
| SiO2-Kugeln | Durchmesser: 8 - 12 µm | |
| alkaliarmen Borosilikatglaskugeln (W210, 3M) | 12 µm | 95% |
| | 9 µm | 90% |
| | 3 µm | 50% |
| | 1 µm | 10% |
| Alkalialumosilikatglaskugeln (W410, 3M) | 24 µm | 95% |
| | 15 µm | 90% |
| | 4 µm | 50% |
| | 1 µm | 10% |
| Alkalialumosilikatglaskugeln | 44 µm | 95% |
| | 28 µm | 90% |
| | 10 µm | 50% |
| | 1 µm | 10% |

Die erfindungsgemäße Glasfritte, umfassend glasfluß-bildende und strukturgebende Partikel, kann zusätzlich mit Pigmenten, Füll- oder Zusatzstoffen versetzt sein. Dies können beispielsweise farbgebende Pigmente sein. Bevorzugt können temperaturstabile anorganische Pigmente verwendet werden, wie sie für Emaille-Beschichtungen für Kochflächen oder Glasbeschichtungen bekannt sind. Dies können etwa TiO2, Spinelle, CrCu-Spinelle, Fe-Spinelle, Glimmer, glimmerbasierte Effektpigmente mit beispielsweise SiO2 und/oder TiO2 und/oder Fe2O3 und/oder SnO2 basierte Beschichtungen sein.

Der Masseanteil dieser Pigmente, insbesondere der farbgebenden Pigmente, an der Gesamtmasse der glasflußbildenden Pigmente kann 1 bis 60 Gew.-%, bevorzugt 3 bis 40 Gew.-% und besonders bevorzugt 5 - 30 Gew.-% betragen.

Die Erfindung betrifft weiterhin die Erzeugung einer Paste unter Verwendung der Glasfritte zum Glasieren, Emaillieren oder Dekorieren einer Oberfläche oder eines Teilbereiches einer Oberfläche eines Substrates. Die Glasfritte kann zum Erzeugen einer Paste verwendet werden, wobei ein Anpastmittel, umfassend ein organisches und/oder anorganisches Anpastmittel, verwendet werden kann.

Der Masseanteil des Anpastmittels an der Gesamtmasse der Paste kann in einem Bereich von 30 bis 90 Gew.-%, bevorzugt 45 bis 80 Gew.-% und besonders bevorzugt 53 bis 68 Gew.-% liegen.

Als Anpastmittel können bekannte hochsiedende Siebdrucköle, beispielsweise aus Baumharzmischungen, verwendet werden. Es können auch vorteilhafterweise UV-härtbare Siebdruckmedien eingesetzt werden. Bevorzugt können lösungsmittelfreie Siebdruckpasten verwendet werden.

In einer besonderen Ausführungsform können den Siebdruckpasten organische und/oder anorganische Anpastsubstanzen beigegeben, umfassend Cellulose, HydroxyPropylcellulose, Xanthan Gum, Polyvinylpyrolidon, Polyethylenglycol, Polyvinylalkohol oder polydisperse Kieselsäure. Hierdurch kann die Viskosität der Paste beeinflusst und optimiert werden.

Die Erfindung betrifft ferner ein Verfahren zum Erzeugen einer Schicht mit haptischen Eigenschaften unter Verwendung einer Paste wie vorstehend beschrieben.

Die Erzeugung einer Schicht mit haptischen Eigenschaften auf der Oberfläche eines Substrates oder eines Teilbereiches eines Substrates kann durch Applizieren der Paste auf das Substrat und anschließenden Einbrennen erfolgen.

Das Applizieren der Paste auf das Substrat kann mittels Flüssigbeschichtungsverfahren, etwa durch Sprühen, Tauchen, Rakeln, Pinseln, mittels Tampondruck oder durch Abziehbilder ausgeführt werden.

Bevorzugt erfolgt der Auftrag mittels Siebdruck. Als besonders geeignet haben sich Siebdruckgewebe mit einer Feinheit von 100 bis 140 Fäden pro Zentimeter erwiesen.

In einer weiterhin bevorzugten Ausführungsform erfolgt der Auftrag über Abziehbilder. Dieses Verfahren kann besonders geeignet sein bei Verwendung nicht planer Substrate, etwa gebogener Kaminsichtscheiben.

Das Einbrennen kann einen ersten Trocknungs- bzw. Aushärteprozess umfassen. Dieser Prozess kann beispielsweise thermisch durch Umluft oder durch Trocknung mittels Infrarot-Strahlung erfolgen. Bevorzugt liegt die Temperatur in einem Bereich von 100 bis 250 °C, besonders bevorzugt in einem Bereich von 120 bis 200 °C. In einer besonderen Ausführungsform kann auch mittels kurzwelliger UV-Strahlung ein Aushärten der applizierten Schicht erfolgen.

Des weiteren kann das Einbrennen vorzugsweise einen Temperaturprozess umfassen, wobei die Glasfritte aufgeschmolzen werden kann. Dieser Temperaturprozess kann bei Temperaturen in einem Bereich von 400 bis 1.000 °C, bevorzugt von 600 bis 850 °C und besonders bevorzugt von 750 bis 830 °C erfolgen.

In einer besonders bevorzugten Ausführungsform kann das Einbrennen während eines Keramisier-Prozesses erfolgen, beispielsweise bei der Herstellung eines als Kochfeld oder Kaminsichtscheibe verwendeten Substrates aus Glaskeramik. Hierdurch kann ein besonders einfaches und kostengünstiges Einbrennen der applizierten Schicht ausgeführt werden.

In einer weiterhin bevorzugten Ausführungsform kann das Einbrennen während eines Sekundäreinbrandes erfolgen.

Weiterhin kann das Einbrennen auch während eines Umformens des Substrates bei entsprechend erhöhter Temperatur erfolgen, beispielsweise bei einem Biegen des Substrates. Das Einbrennen kann auch während eines thermischen Vorspannprozesses erfolgen.

In einer besonderen erfindungsgemäßen Ausführungsform, bei der Verwendung eines organischen Schicht-bildenden Materials für die strukturgebenden Partikel erfolgt das Einbrennen der Schichten bei Temperaturen von kleiner 200°C.

In einer weiteren besonderen erfindungsgemäßen Ausführungsform, bei der Verwendung einer polysiloxanbasierten und oder sol-gel-basierten schichtbildenden Matrix für die strukturgebenden Partikel erfolgt das Einbrennen der Schichten bei Temperaturen von 200°C - 700 °C, bevorzugt von 230 - 500 °C, ganz besonders bevorzugt von 270 - 400 °C.

Die auf der Oberfläche oder eines Teilbereiches der Oberfläche des Substrates erzeugte Schicht mit haptischen Eigenschaften kann eine mittlere Schichtdicke von 1 bis 50 µm, bevorzugt von 2 bis 25 µm und besonders bevorzugt von 2 bis 10 µm aufweisen. In einer weiteren Ausführungsform beträgt die mittlere Schichtdicke 3 bis 5 µm.

In einer bevorzugten Ausführungsform sind die strukturgebenden Partikel sowohl teilweise ohne als auch mit Kristallisationszwischenschichten in die Schicht eingebettet.

In einer weiteren bevorzugten Ausführungsform sind die strukturgebenden Partikel nur teilweise mit der aufgeschmolzenen Schicht überdeckt. Mit anderen Worten, ein Anteil einiger der strukturgebenden Partikel kann aus der Oberfläche der erzeugten Schicht herausragen bzw. hervorstehen. Die Außenkontur der hervorstehenden Anteile der strukturgebenden Partikel und deren Anzahl kann die haptischen Eigenschaften der Schicht maßgeblich beeinflussen. So können hervorstehende, abgerundete und kantenlose strukturgebende Partikel eine samtig anmutende Haptik bewirken, wohingegen hervorstehende strukturgebende Partikel mit Kanten und/oder Spitzen eine rau anmutende Haptik bewirken können.

In einer weiteren Ausführungsform können die sturkturgebenden Partikel auch vollständig in die Schicht eingebettet sein.

In einer bevorzugten Ausführungsform sind die glasflußbildenden Partikel in der erzeugten Schicht vollständig oder annähernd vollständig aufgeschmolzen. Die Meso- und/oder die Mikroporosität der Schicht kann bei weniger als 1 Volumen-% liegen.

In einer weiteren Ausführungsform sind die glasfluß-bildenden Partikel nur teilweise aufgeschmolzen. Die so erzeugte Schicht kann eine meso- bis mikroskopische Porosität mit Poren aufweisen, wobei die Porenradien in einem Bereich von 20 bis 1.000 nm liegen können. Diese Ausführungsform kann besonders vorteilhaft für eine hohe Substratfestigkeit sein.

Der in einer Draufsicht, etwa mittels eines Rasterelektronenmikroskops oder eines Lichtmikroskops, erkennbare Flächenbelegungsgrad der erzeugten Schicht kann mehr als 5%, bevorzugt mehr als 20% und besonders bevorzugt mehr als 30% betragen. Die maximal mögliche Belegung entspricht im Fall von kugelförmigen strukturgebenden Partikeln der dichtesten Kugelpackung.

Wenn allerdings die Schichtdicke der Matrix beziehungsweise des Schicht-bildenden Materials größer ist als der mittlere Partikeldurchmesser der strukturgebenden Partikel, so ist die reale Fläche, welche die Partikel ohne Matrix auf der Substratoberfläche belegen, größer als die direkt mit dem Mikroskop erkennbare Fläche.
Dieser reale Flächenbelegungsgrad der strukturgebenden Partikel in der erzeugten Schicht kann mehr als 10 %, bevorzugt mehr als 25 % und besonders bevorzugt mehr als 40% betragen.

In der haptischen Schicht kann, dass Volumenverhältnis von Matrix, beziehungsweise Schicht-bildendem Material zu strukturgebenden Partikeln mehr als 0,1, bevorzugt mehr als 0,2, ganz besonders bevorzugt mehr als 0,4 betragen.

Die Rauhigkeitswerte der Oberfläche der erzeugten Schicht können zwischen Ra = 0,2 und Ra = 1,2 µm liegen. Die nachfolgende Tabelle zeigt den Rauhigkeitswert einer auf einem Glaskeramik-Substrat erzeugten Schicht unter Verwendung unterschiedlicher Masseanteile von strukturgebenden Partikeln im Verhältnis zu glasfluß-bildenden Partikeln. Hierbei wird unterschieden zwischen einer erzeugten Schicht mit einer samtigen Haptik (Schicht A) sowie einer erzeugten Schicht mit einer rauen Haptik (Schicht B).

Das in der Tabelle angegebene Massenverhältnis bezieht sich auf das Verhältnis von glasfluß-bildenden Partikeln zu strukturgebenden Partikeln in der Glasfritte.

**Tabelle 2:**

| Probe | PV [µm] | StdDev | rms [µm] | StdDev | Ra [µm] | StdDev |
|---|---|---|---|---|---|---|
| Unbehandeltes Substrat, Material Glaskeramik | **0,55** | 0,05 | **0,07** | 0,01 | **0,06** | 0,01 |
| pigmentiertes Oberseitendekor, Schicht A | **3,55** | 0,73 | **0,29** | 0,03 | **0,21** | 0,02 |
| pigmentiertes Oberseitendekor, Schicht B, mit strukturgebenden Partikeln für samtige Haptik | **9,69** | 1,27 | **0,99** | 0,05 | **0,69** | 0,04 |
| transparente glasfluß-bildende Partikel ohne strukturgebende partikel und ohne Pigmente | **3,51** | 0,48 | **0,33** | 0,03 | **0,22** | 0,02 |
| transparente glasfluß-bildende Partikel mit strukturgebenden Partikeln für samtige Haptik mit Massenverhältnis von 19 | **4,54** | 0,46 | **0,52** | 0,03 | **0,42** | 0,02 |
| transparente glasfluß-bildende Partikel mit strukturgebenden Partikeln für samtige Haptik mit Massenverhältnis von 9 | **4,99** | 0,90 | **0,52** | 0,04 | **0,41** | 0,02 |
| transparente glasfluß-bildende Partikel mit strukturgebenden Partikeln für samtige Haptik mit Massenverhältnis von 5,7 | **5,54** | 1,27 | **0,52** | 0,05 | **0,39** | 0,04 |
| transparente glasfluß-bildende Partikel mit strukturgebenden Partikeln für samtige Haptik mit Massenverhältnis von 1,5 | **8,75** | 1,22 | **0,90** | 0,06 | **0,67** | 0,04 |
| transparente glasfluß-bildende Partikel mit strukturgebenden Partikeln für samtige Haptik mit Massenverhältnis von 1,2 | **8,90** | 1,62 | **1,15** | 0,02 | **1,01** | 0,02 |
| transparente glasfluß-bildende Partikel mit strukturgebenden Partikeln für raue Haptik mit Massenverhältnis von 19 | **9,13** | 1,47 | **0,44** | 0,05 | **0,32** | 0,03 |
| transparente glasfluß-bildende Partikel mit strukturgebenden Partikeln für raue Haptik mit Massenverhältnis von 9 | **11,10** | 1,57 | **0,55** | 0,06 | **0,40** | 0,04 |
| transparente glasfluß-bildende Partikel mit strukturgebenden Partikeln für raue Haptik mit Massenverhältnis von 5,7 | **11,27** | 2,44 | **0,57** | 0,04 | **0,41** | 0,02 |
| transparente glasfluß-bildende Partikel mit strukturgebenden Partikeln für raue Haptik mit Massenverhältnis von 1,5 | **13,76** | 1,45 | **1,17** | 0,06 | **0,82** | 0,05 |
| transparente glasfluß-bildende Partikel mit strukturgebenden Partikeln für raue Haptik mit Massenverhältnis von 1,2 | **13,01** | 1,16 | **1,27** | 0,07 | **0,87** | 0,04 |
| transparente glasfluß-bildende Partikel mit strukturgebenden | **11,33** | 0,98 | **0,45** | 0,04 | **0,30** | 0,03 |
| Partikeln (Schicht B) für raue Haptik mit Massenverhältnis von 19 | | | | | | |
| transparente glasfluß-bildende Partikel mit strukturgebenden Partikeln (Schicht B) für raue Haptik mit Massenverhältnis von 9 | **11,73** | 2,15 | **0,52** | 0,06 | **0,35** | 0,04 |
| transparente glasfluß-bildende Partikel mit strukturgebenden Partikeln (Schicht B) für raue Haptik mit Massenverhältnis von 5, 7 | **12,34** | 1,90 | **0,58** | 0,05 | **0,40** | 0,04 |
| transparente glasfluß-bildende Partikel mit strukturgebenden Partikeln (Schicht B) für raue Haptik mit Massenverhältnis von 1,5 | **13,79** | 1,42 | **1,30** | 0,05 | **0,86** | 0,05 |
| transparente glasfluß-bildende Partikel mit strukturgebenden Partikeln (Schicht B) für raue Haptik mit Massenverhältnis von 1,2 | **13,90** | 2,16 | **1,35** | 0,10 | **0,88** | 0,08 |

| | | | | | | |
|---|---|---|---|---|---|---|
| Rauhigkeitswerte von ausgewählten Schichten, mit Ra = arithmetischer Mittenrauwert rms = quadratischer Mittenrauwert PV = Peak to Value Wert Meßmethode: Weißlichtinterferenzmikroskop | | | | | | |

Typische Haft- und Gleitreibwerte ausgewählter Schichten sind in der nachfolgenden Tabelle aufgeführt.

Das in der Tabelle angegebene Massenverhältnis bezieht sich auf das Verhältnis von glasfluß-bildenden Partikeln zu strukturgebenden Partikeln in der Glasfritte.

**Tabelle 3: Haft- und Gleitreibwerte von ausgewählten Schichten**

| | GLEITREIBWERT | | HAFTREIBWERT | |
|---|---|---|---|---|
| Probe | MW | größte Streubreite | MW | Streubreite |
| Unbehandeltes Substrat, Material Glaskeramik | **0,29** | 0,08 | **0,94** | 0,10 |
| pigmentiertes Oberseitendekor, Schicht A | **0,43** | 0,05 | **0,62** | 0,06 |
| pigmentiertes Oberseitendekor Schicht B | **0,54** | 0,08 | **0,71** | 0,09 |
| pigmentiertes Oberseitendekor Schicht B mit strukturgebenden Partikeln für samtige Haptik | **0,50** | 0,01 | **0,88** | 0,09 |
| transparente glasfluß-bildende Partikel ohne strukturgebende Partikel und ohne Pigmente | **0,35** | 0,08 | **0,88** | 0,09 |
| transparente glasfluß-bildende Partikel mit strukturgebenden Partikeln für samtige Haptik mit Massenverhältnis von 19 | **0,40** | 0,06 | **0,64** | 0,10 |
| transparente glasfluß-bildende Partikel mit strukturgebenden Partikeln für samtige Haptik mit Massenverhältnis von 9 | **0,34** | 0,02 | **0,65** | 0,06 |
| transparente glasfluß-bildende Partikel mit strukturgebenden Partikeln für samtige Haptik mit Massenverhältnis von 5,7 | **0,30** | 0,02 | **0,69** | 0,09 |
| transparente glasfluß-bildende Partikel mit strukturgebenden Partikeln für samtige Haptik mit Massenverhältnis von 1,5 | **0,51** | 0,01 | **0,78** | 0,07 |
| transparente glasfluß-bildende Partikel mit strukturgebenden Partikeln für samtige Haptik mit Massenverhältnis von 1,2 | **0,45** | 0,03 | **0,82** | 0,09 |
| transparente glasfluß-bildende Partikel mit strukturgebenden | **0,51** | 0,02 | **0,94** | 0,05 |
| Partikeln (Variante A) für raue Haptik mit Massenverhältnis von 1,5 | | | | |
| transparente glasfluß-bildende Partikel mit strukturgebenden Partikeln (Schicht A) für raue Haptik mit Massenverhältnis von 1,2 | **0,55** | 0,04 | **1,04** | 0,13 |
| transparente glasfluß-bildende Partikel mit strukturgebenden Partikeln (Schicht B) für raue Haptik mit Massenverhältnis von 1,5 | **0,55** | 0,01 | **0,95** | 0,08 |
| transparente glasfluß-bildende Partikel mit strukturgebenden Partikeln (Schicht B) für raue Haptik mit Massenverhältnis von 1,2 | **0,56** | 0,01 | **0,91** | 0,13 |

### Verwendete Meßmethoden:

Zur Ermittlung des Partikelfüllgrades wurde eine optische Auszählung von Lichtmikroskopbilder bei einer 100 fachen Vergrößerung der Partikel an 10 unterschiedlichen Messstellen gemessen.

Der Haftreibwert wurde mittels physikalischen Versuchs der "schiefen Ebene" ermittelt.

Der Gleitreibwert wurde mit einem Tribometer ermittelt, bei einer Geschwindigkeit von 0,05 cm/s, Last: 1 N, Gegenkörper mit Leder, bezogener Finger mit einem Durchmesser von 10 mm.

Die Haftfestigkeit der erzeugten Schicht ist sehr hoch. Sie kann durch Bekleben mit einem Steifen transparenten Klebefilms (Tesafilm Typ 104, Fa. Beiersdorf) und ruckartigen Abreißen ermittelt werden, wobei nach dem Abreißen die Menge der anhaftenden Partikel an dem Klebefilm untersucht werden. Für die erzeugten Schichten konnten keine bzw. nur wenig anhaftende, für die praktische Anwendung unkritische Anhaftungen ermittelt werden.

Auch die chemische und die mechanische Beständigkeit der erzeugten Schicht ist sehr hoch. Sie kann durch einen höheren Anteil an strukturgebenden Partikeln weiter gesteigert werden.

Die mechanische Kratzbeständigkeit kann beispielsweise durch den dem Fachmann bekannten BOSCH Siemens Hausgerätetest geprüft werden. Bei diesem Kratztest mit einer Siliziumcarbidspitze, werden bei den erfindungsgemäßen Schichten Kratzfestigkeiten größer 800 g, bevorzugt größer 1000 g, ganz besonders bevorzugt größer 1300 g erreicht.

Die erfindungsgemäßen Schichten mit haptischen Eigenschaften erfüllen alle dem Fachmann bekannten Softchemo-mechanischen Abrieb- und Handabriebprüfung nach: DIN EN 60068-2-70 / IEC 68-2-70, BMW GS 97034 / GS 97045. DaimlerChrysler DBL 7384, Ford WSS-M2P188-A1

Die Fingerprintunauffälligkeit im Vergleich zu einer nicht beschichteten Substrat-Oberfläche wurde mit einer Kunstschweißlösung nach dem Fachmann bekannten Verfahren angelehnt an DIN 53160-2:2001 BMW GS 97045-2, DBL 73084 und VW TL 226 durchgeführt.

Insbesondere ist die erzeugte Schicht chemisch beständig gegenüber säurehaltiger Kontaktmedien wie Zitronensäure, Essigsäure. Sie weist auch eine hohe Beständigkeit gegenüber Alkalien, etwa gegenüber alkalischen Reinigern, auf.

Zudem ist die erzeugte Schicht gut zu reinigen und unempfindlich gegenüber "Fingerabdrücken".

Die erzeugte Schicht zeichnet sich zudem durch eine hohe thermische Beständigkeit bis hin zu Temperaturen in einem Bereich von 900 °C aus.

Die mechanische Beständigkeit gegenüber mechanisch wirkenden Reinigungsmitteln wie Scheuerschwamm oder Glaskeramik-Schaber ist sehr hoch.

Das Substrat kann Materialien aus der Gruppe der Glaskeramiken, der hochfesten Gläser, Kalknatrongläser, Borosilikatgläser und/oder Alumosilikatgläser umfassen.

Bevorzugt werden als Substrat transparente und/oder volumengefärbte und/oder teilweise beschichtete Substrate aus Glas oder Glaskeramik verwendet. Es können auch thermisch und/oder chemisch vorgespannte Gläser als Substrat verwendet werden.

Besonders bevorzugt werden Substratgläser verwendet, wie sie im Bereich der weißen Ware bzw. Haushaltsgeräte eingesetzt werden, beispielsweise für Back- und Gargeräte, Kühlschränke, Dampfgarer, Bedienblenden für derartige Geräte, Gaskochgeräte, Spülen oder Geschirrspülgeräte.

Weiterhin bevorzugt werden hochfeste Gläser als Substrate verwendet, welche für elektrische bzw. elektronische Geräte eingesetzt werden, beispielsweise für Mobiltelefone, Computer, Touchdisplays oder Fernsehgeräte.

Ebenso können auch hochfeste Gläser als Substrate verwendet werden, welche in unterschiedlichen Funktionen in den Bereichen Fahrzeug- oder Flugzeugbau, Eisenbahn oder Schiffbau zum Einsatz kommen.

In einer bevorzugten Ausführungsform werden Kalknatrongläser und/oder Borosilikatgläser und/oder Alumosilikatgläser und/oder eisenreduzierte Gläser als Substrat verwendet.

Es können auch Dünngläser mit einer Dicke von 30 µm bis 2 mm verwendet werden.

Die Substrate können eine plane oder eine gebogene, gekrümmte oder anderweitige Form aufweisen.

Die Substrate können mechanisch bearbeitete oder auch geätzte Oberflächen aufweisen.

Die Schicht kann auf die Oberfläche eines Substrates oder auf einen Teilbereich appliziert werden. Auf einem Substrat können auch mehrere Schichten mit unterschiedlichen haptischen Eigenschaften appliziert werden. So kann beispielsweise ein Bereich einer Substrat-Oberfläche Bedienfunktionen aufweisen und mit einer Schicht ausgestattet werden, welche eine samtige haptische Wahrnehmung bewirkt, wohingegen ein anderer Teilbereich derselben Substrat-Oberfläche Kochfunktionen aufweist und vorteilhafterweise mit einer Schicht ausgestattet wird, die eine raue haptische Wahrnehmung bewirkt.

So können beispielsweise Substrate aus transparenter Glaskeramik ohne oder mit Unterseitenbeschichtung verwendet werden, welche als Kochfeld eingesetzt werden können.

Weitere Einzelheiten der Erfindung ergeben sich aus der Beschreibung der dargestellten Ausführungsbeispiele und den angefügten Ansprüchen.

### Die Zeichnungen zeigen:

- Figur 1: Ausführungsformen für lokal strukturierte haptische Schichten,
- Figur 2: Schicht mit einer samtigen haptischen Wahrnehmung,
- Figur 3: Schicht mit einer rauen haptischen Wahrnehmung,
- Figur 4: REM-Aufnahme einer Schicht mit samtiger haptischer Wahrnehmung im Querschnitt,
- Figur 5: REM-Aufnahme einer Schicht mit rauer haptischer Wahrnehmung im Querschnitt,
- Figur 6: Transmissionsverläufe verschiedener Proben als Funktion der Wellenlänge,
- Figur 7: winkelabhängige Lichtstreuung verschiedener Proben, und
- Figuren 8 bis 10: lichtmikroskopische Aufnahmen von Proben.

### Detaillierte Beschreibung bevorzugter Ausführungsformen

In der nachfolgenden Tabelle sind verschiedene erfindungsgemäße Gläser zur Herstellung der glasfluß-bildenden Partikel mit ihren Zusammensetzungen zusammengefasst.

**Tabelle 4: Zusammensetzung in Gew.-% erfindungsgemäßer Gläser**

| Gew-% | Glas A | Glas B | Glas C | Glas D | Glas E | Glas F |
|---|---|---|---|---|---|---|
| SiO2 | 44 - 57 | 53 - 63 | 57 - 62 | 47 - 52 | 40 - 50 | 63 - 73 |
| Al2O3 | 5 - 25 | 15 - 25 | 5 - 8 | 2 - 6 | 9 - 15 | 0 - 7 |
| B2O3 | 0 - 27 | 15 - 22 | 18 - 23 | 17 - 21 | 10 - 15 | 12 - 29 |
| Li2O | 0-10 | 2 - 7 | 2 - 6 | 3 - 5 | 0 - 4 | 0 - 6 |
| Na2O | 0-10 | 0 -1 | 0 -1 | 1 - 5 | 1 - 4 | 0 - 8 |
| K2O | 0-10 | 0 -1 | 0 - 4 | 5 - 10 | 0 - 3 | 0 - 8 |
| CaO | 0-4 | 1 - 4 | 1 - 2 | 0 - 2 | 0 - 3 | 0 - 5 |
| MgO | 0-3 | 1 - 4 | 0 - 2 | 0 - 1 | 0 - 3 | 0.1 - 5 |
| BaO | 0-4 | 0 - 1 | 0 - 2 | 0 - 2 | 16 - 24 | 0 -5 |
| SrO | 0-4 | 1 - 4 | 0,5 - 2 | 0 - 1 | 0 - 2 | 0 - 4 |
| ZnO | 0-15 | 1 - 4 | 0 - 2 | 0 - 3 | 8 - 15 | 0 - 15 |
| TiO2 | 0-3 | 0 - 1 | 0 -2 | 0 -2 | 0 -3 | 0 - 5 |
| ZrO2 | 0-7 | 1 - 4 | 2 - 5 | 0 -2 | 0- 4 | 0 -5 |
| As2O3 | 0-1 | 0 - 1 | 0 - 1 | 0 -1 | 0 -1 | 0 -1 |
| Sb2O3 | 0-15 | 0 - 1 | 0 -1 | 0 -1 | 0 -15 | 0 -1 |
| F | 0-3 | 0 - 1 | 0 -1 | 0 -1 | 0- 1 | 0 -1 |
| H2O | 0-5 | 0 - 3 | 0- 3 | 0 -3 | 0 -3 | 0-3 |

Weitere erfindungsgemäße Gläser zur Herstellung von Glasflußbildenden Partikeln, welche vor allem für die Herstellung von haptischen Schichten auf Gläsern, im Speziellen Kalknatrongläsern verwendet werden, sind in Tabelle 5 zusammengefasst:

| Gew-% | Glas G | Glas H | Glas I | Glas J | Glas K |
|---|---|---|---|---|---|
| SiO₂ | 25 - 55 | 35 - 65 | 30 - 54 | 6 - 20 | 6 - 15 |
| Al₂O₃ | 3 - 18 | 0 | 0 - 17,5 | 0 - 5 | 0 |
| B₂O₃ | 5 - 25 | 0 | 13-28 | 20 - 38 | 20- 28 |
| Li₂O | 0-12 | 0 - 6 | 3 - 6 | 0 | 0 |
| Na₂O | 3 - 18 | 0 -6 | 4 - 10 | 0 | 0 |
| K₂O | 3-18 | 0 -6 | 0 - 2 | 0 | 0 |
| CaO | 3-17 | 0 - 12 | 0 - 6 | 0 | 0 |
| MgO | 0-10 | 0 - 12 | 0 - 4 | 0 | 0 |
| BaO | 0-12 | 0 - 38 | 0 | 0 | 0 |
| SrO | 0 | 0 - 16 | 0 - 4 | 0 | 0 |
| ZnO | 0 | 17,5 - 38 | 3 - 13 | 35 - 70 | 58 - 70 |
| TiO₂ | 0-5 | 0 | 0 - 2 | 0 -5 | 0 |
| ZrO₂ | 0-3 | 0 | 0 - 2 | 0 -5 | 0 |
| Bi₂O₃ | 0 | 0 | 0 | 0 - 20 | 0 |
| CoO | 0 | 0 | 0 | 0 - 5 | 0 |
| Fe₂0₃ | 0 | 0 | 0 | 0 -5 | |
| MnO | 0 | 0 | 0 | -10 | 0,5 - 1 |
| Ce0₂ | 0 | 0 | 0 | 0 | 0 - 3 |
| F | 0 | 0 | 0 - 3,3 | 0 - 6 | 0 |

Die Gläser wurden geschmolzen und nach dem Abkühlen aufgemahlen, um einen glasfluß-bildenden Partikel herzustellen.

Anschließend wurden die glasfluß-bildenden Partikel mit den strukturgebenden Partikeln versetzt, um die erfindungsgemäße Glasfritte zu erzeugen. Durch Zusatz von Siebdruckölen wurden Pasten hergestellt, welche mittels Siebdruck auf Substrate aus Lithium-Aluminosilikat-Glaskeramiken aufgetragen wurden. Das Einbrennen der applizierten Paste erfolgte während des Keramisierens.

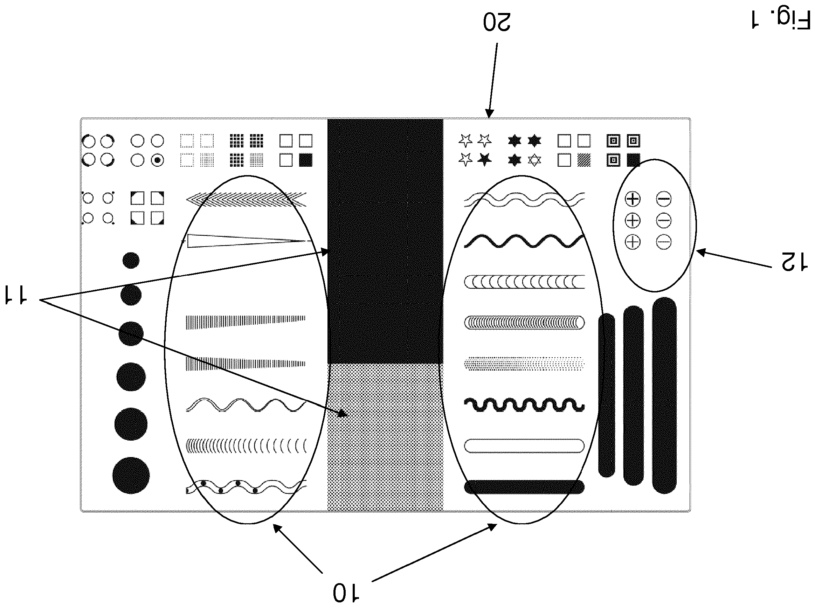

Figur 1 zeigt verschiedene mögliche Ausführungsformen lokal strukturierter haptischer Schichten eines Substrates 20. Das Substrat kann insbesondere, ohne Beschränkung auf die spezielle Ausführungsform der Figur 1 ein Küchenelement aus Glas oder Glaskeramik sein, wobei die Schicht mit strukturgebenden Partikel eine Bedruckung des Küchenelementes darstellt. Insbesondere ist die Schicht als eine lokale und oder vollflächige Bedruckung für eine volumengefärbte und/oder farbig beschichtete Glaskeramikkochfläche für Strahlungsheizkörper und oder Induktionsgeräte geeignet.

In Figur 1 zeigen die durch 10 gekennzeichneten Bereiche Ausführungsformen für Gleitschalter, die berührungsempfindlich ausgebildet sind. Die Teilbereiche 10 der Oberfläche des Substrates, welche die berührungsempfindlichen Gleitschalter aufweisen, wurden mit einer Schicht, welche eine samtige haptische Wahrnehmung bewirkt, ausgebildet.

Die durch 11 gekennzeichneten Teilbereiche der Substratoberfläche zeigen zwei Flächen, welche mit einer Schicht ausgestattet wurden, die eine raue haptische Wahrnehmung erzeugt. Diese Funktionsbereiche sind als Kochfläche ausgebildet, wobei eine raue haptische Wahrnehmung vorteilhaft ist aufgrund der höheren Haftreibung.

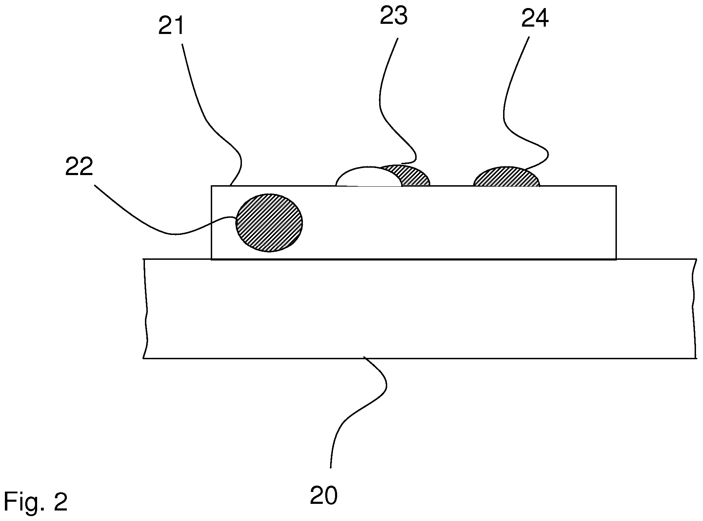

Figur 2 zeigt eine Schicht 21 auf einem transparenten Substrat 20. Kugelförmige strukturgebende Partikel aus Polymethylsiloxan haben ihre Außenkontur durch die Applikation und den Einbrand nicht bzw. nicht wesentlich verändert, da sie einen sehr hohen Schmelzpunkt oberhalb der Einbrenntemperatur aufweisen. Sie können daher als vollständig in der Schicht eingebettete Partikel 22 vorliegen oder als nur teilweise eingebettete Partikel 24. Weiterhin können sie zu einem Anteil mit der Schicht überdeckt sein, so daß ein Anteil der Oberfläche des Partikels 23 frei von Glas ist. Eine derartige Schicht mit einer homogenen Verteilung der strukturgebenden Partikel bezüglich der Höhe und Breite der kugelförmigen Außenkontur bewirkt eine haptisch samtige Wahrnehmung.

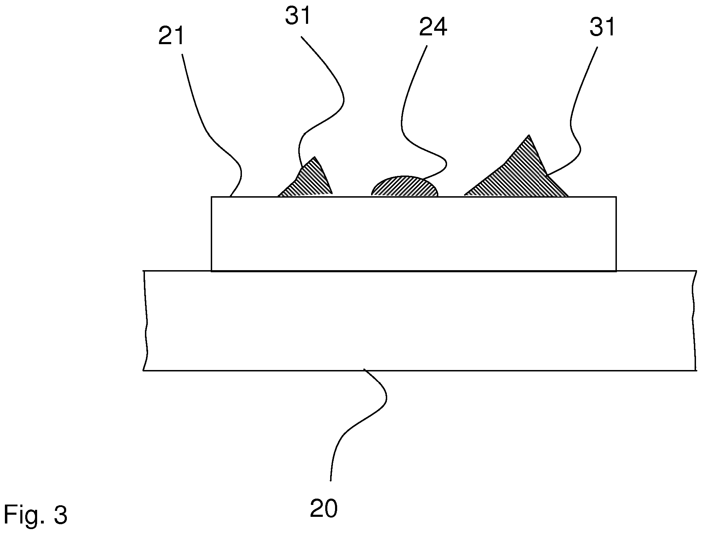

In Figur 3 ist eine Schicht dargestellt, bei der sowohl strukturgebende Partikel mit einem Schmelzpunkt oberhalb der Einbrenntemperatur als auch strukturgebende Partikel mit einer niedrigeren Erweichungstemperatur, beispielsweise Partikel aus Alkalialuminosilikatglas oder alkaliarmen Borosilikatglas, verwendet wurden. Bei dem strukturgebenden Partikel mit der niedrigeren Erweichungstemperatur kommt es während des Einbrennens zu einem teilweisen Aufschmelzen, so dass Bruchstücke entstehen. Anteile der Bruchstücke 31 stehen als Spitze aus der Schicht hervor und bewirken eine raue haptische Wahrnehmung.

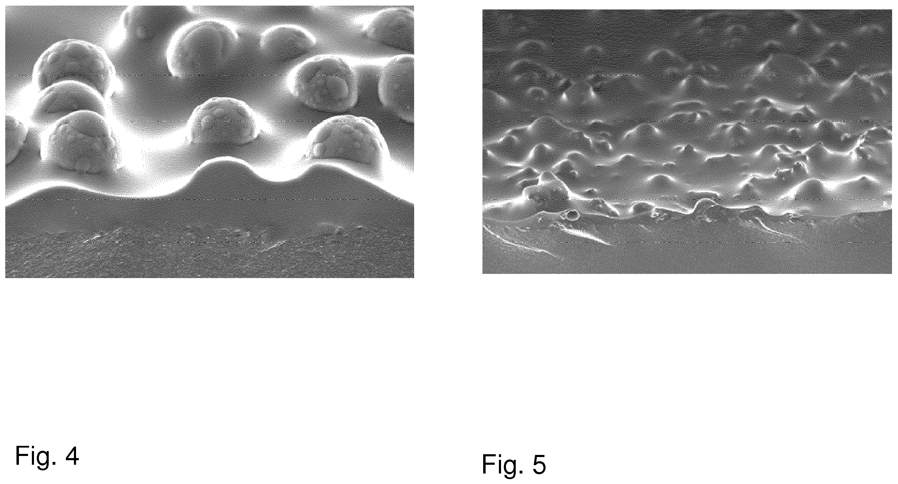

In Figur 4 sind eine REM-Aufnahme einer Schicht mit samtiger haptischer Wahrnehmung und in Figur 5 eine Schicht mit rauer haptischer Wahrnehmung im Querschnitt abgebildet.

### Beispiel 1: Herstellung einer Schicht mit samtiger Haptik

Es werden 19 g glasfluß-bildende Partikel eines aufgemahlenen Glases C mit 61,5 g Siebdruckanpasstmedium und 19 g strukturgebende, homogene kugelförmige Methylpolysiloxanpartikeln mit einer mittleren Teilchengröße von 4,5 µm versetzt. Die auf diese Weise erzeugte Paste wird mittels eines Dispermaten 10 Min homogenisiert.

Mittels eins 140 er Siebes werden anschließend strukturierte Schichten über Siebdruck auf Grünglas aufgebracht. Die derart applizierten Schichten werden bei einer Temperatur von 180 °C für 30 Min angetrocknet. Der Einbrand erfolgt bei ca. 900 °C während der Keramisierung eines volumengefärbten Substrates aus Glaskeramik.

Es werden erfindungsgemäße haptische Schichten mit samtiger Haptik und guten chemischen und mechanischen Gebrauchseigenschaften erhalten.

### Beispiel 2: Herstellung einer Schicht mit rauer Haptik (Variante A)

Es werden 17 g glasfluß-bildende Partikel eines aufgemahlenen Glases C mit 60 g Siebdruckanpasstmedium und 14 g strukturgebende Partikel einer Mischung aus Kugeln und idiomorphen (kantigen) Partikeln von Alkalialuminosilicateglas mit einer Teilchengröße von 95 % kleiner gleich 12 µm versetzt. Diese Paste wird mittels eines Dispermaten 10 Min homogenisiert. Mittels eins 140 er Siebes werden anschließend strukturierte Schichten über Siebdruck auf Grünglas aufgebracht. Diese Schichten werden bei 180 °C für 30 Min angetrocknet.
Der Einbrand erfolgt bei ca. 900 °C während der Keramisierung der volumengefärbten Glaskeramik.

Es werden erfindungsgemäße haptische Schichten mit rauer Haptik und guten chemischen und mechanischen Gebrauchseigenschaften erhalten.

### Beispiel 3: Herstellung einer Schicht mit rauer Haptik (Variante B):

Es werden 17 g glasfluß-bildende Partikel eines aufgemahlenen Glases C mit 60 g Siebdruckanpasstmedium und 14 g strukturgebende Partikel einer Mischung aus Kugeln und idiomorphen (kantigen) Partikeln von Alkaliarmes Borosilikatglas mit einer Teilchengröße von 95 % kleiner gleich 24 µm versetzt.
Diese Paste wird mittels eines Dispermaten 10 Min homogenisiert. Mittels eins 140 er Siebes werden anschließend strukturierte Schichten über Siebdruck auf Grünglas aufgebracht. Diese Schichten werden bei 180 °C für 30 Min angetrocknet.
Der Einbrand erfolgt bei ca. 900 °C während der Keramisierung der volumengefärbten Glaskeramik.

Es werden erfindungsgemäße haptische Schichten mit rauer Haptik und guten chemischen und mechanischen Gebrauchseigenschaften erhalten.

### Beispiel 4: Herstellung einer Schicht mit samtiger Haptik und Antifingerprintwirkung und mattierenden Eigenschaften:

Es werden 19 g Flußpartikel einer aufgemahlenen Glasfritte mit der Flußzusammensetzung (Glas C) mit 61,5 g Siebdruckanpasstmedium und 19 g strukturgebende homogen kugelförmige Methylpolysiloxanpartikel mit einer mittleren Teilchengröße von 4,5 µm versetzt.
Diese Paste wird mittels eines Dispermaten 10 Min homogenisiert.
Mittels eins 140er Siebes werden anschließend strukturierte Schichten über Siebdruck auf Grünglas aufgebracht. Diese Schichten werden bei 180 °C für 30 Min angetrocknet.
Der Einbrand der erfolgt bei ca. 900 °C während der Keramisierung nicht volumengefärbter Glaskeramik.

Es werden erfindungsgemäße haptische Schichten mit samtiger Haptik, Fingerprintunauffälligkeit und mattierenden optischen Eigenschaften erhalten.

### Beispiel 5: Herstellung einer Schicht mit samtiger Haptik und Antifingerprintwirkung und ein mattierenden Eigenschaften:

Es werden 19 g Flußpartikel einer aufgemahlenen Glasfritte (Zink-Borat-Fluss, Glas J) mit 61,5 g Siebdruckanpasstmedium und 19 g strukturgebende homogen kugelförmige Methylpolysiloxanpartikel mit einer mittleren Teilchengröße von 4,5 µm versetzt.
Diese Paste wird mittels eines Dispermaten 10 Min homogenisiert.
Mittels eins 140 er Siebes werden anschließend strukturierte Schichten über Siebdruck auf 4 mm dickem eisenarmen Kalknatronglas aufgebracht. Diese Schichten werden bei 130 °C für 5 Min angetrocknet.
Der Einbrand der haptischen Schichten erfolgt bei ca. 710 °C für 3 Min während der Vorspannprozesses.

Es werden erfindungsgemäße haptische Schichten mit samtiger Haptik, Fingerprint-Unauffälligkeit und mattierenden optischen Eigenschaften erhalten.

### Beispiel 6: Herstellung einer Schicht mit samtiger Haptik und Antifingerprintwirkung und ein mattierenden Eigenschaften:

Es werden 70 g einer 60 mass-% Lösung eines hochtemperaturstabilen Phenylmethylpolysiloxanharze in Xylol (Handelsnahme REN80 von Wacker Silcones) und 19 g strukturgebende homogen kugelförmige Methylpolysiloxanpartikel mit einer mittleren Teilchengröße von 4,5 µm versetzt.
Diese Siebdruckpaste wird mittels eines Dispermaten 10 Min homogenisiert.
Mittels eins 140 er Siebes werden anschließend strukturierte Schichten über Siebdruck auf vorgespanntem 4 mm dickem eisenarmen Kalknatronglas aufgebracht. Diese Schichten werden bei 300 °C für 1 h gehärtet.

Es werden erfindungsgemäße haptische Schichten mit samtiger Haptik, Fingerprintunauffälligkeit und mattierenden optischen Eigenschaften erhalten.

### Beispiel 7: Herstellung einer Schicht mit samtiger Haptik und Antifingerprintwirkung und ein mattierenden Eigenschaften:

Es werden 40 g eines lösungsmittelfreien zweikomponentigen von Epoxyfunktionalisierten Polysiloxanharze (Silikophon EC von Evonic) und 19 g strukturgebende homogen kugelförmige Methylpolysiloxanpartikel mit einer mittleren Teilchengröße von 4,5 µm versetzt.
Diese Siebdruckpaste wird mittels eines Dispermaten 10 Min homogenisiert.
Mittels eins 140 er Siebes werden anschließend strukturierte Schichten über Siebdruck auf vorgespanntem 4 mm dickem eisenarmen Kalknatronglas aufgebracht. Diese Schichten werden bei 200 °C für 60 h Min gehärtet.

Es werden erfindungsgemäße haptische Schichten mit samtiger Haptik, Fingerprintunauffälligkeit und mattierenden optischen Eigenschaften erhalten.

Nachfolgend wird ein Vergleich der Eigenschaften zweier erfindungsgemäßer beschichteter Substrate mit Vergleichsproben erläutert. Als Substrat für die erfindungsgemäßen Artikel wurde transparente Glaskeramik verwendet. Bei einer ersten Probe wurde die Glaskeramik mit einer Schicht mit rauer haptischer Anmutung und bei einer zweiten Probe mit einer Schicht mit samtiger haptischer Anmutung beschichtet. Die Proben wurden verglichen mit geätztem Glas, nicht geätztem, glatten Kalk-Natron Glas (nachfolgend bezeichnet als "KN-Glas") und einer transparenten, unbeschichteten Glaskeramik. Die nachfolgende Tabelle zeigt einen Vergleich verschiedener optischer und mechanischer Eigenschaften:

| | geätztes Glas | KN-Glas | transparente Glaskeramik | Probe 1: transparente Glaskeramik, rau | Probe 2: transparente Glaskeramik, samtig |
|---|---|---|---|---|---|
| Transmission [%] | 81,6 | 91,7 | 90, 9 | 82,4 | 79,6 |
| Haze [%] | 95,1 | 0,3 | 0,2 | 71,8 | 84,6 |
| Glanz [%] | 6, 6 | 99,9 | 99,7 | 21,2 | 25,9 |
| Haftreibwert | 0,69 | | 0,79 | 0,94 | 0,82 |
| PV [µm] | 19,707 | 0,058 | 0, 619 | 8,329 | 8,115 |
| rms [µm] | 4,807 | 0,002 | 0,089 | 0,598 | 1,180 |
| Ra [µm] | 4,133 | 0,002 | 0,070 | 0,444 | 1,035 |

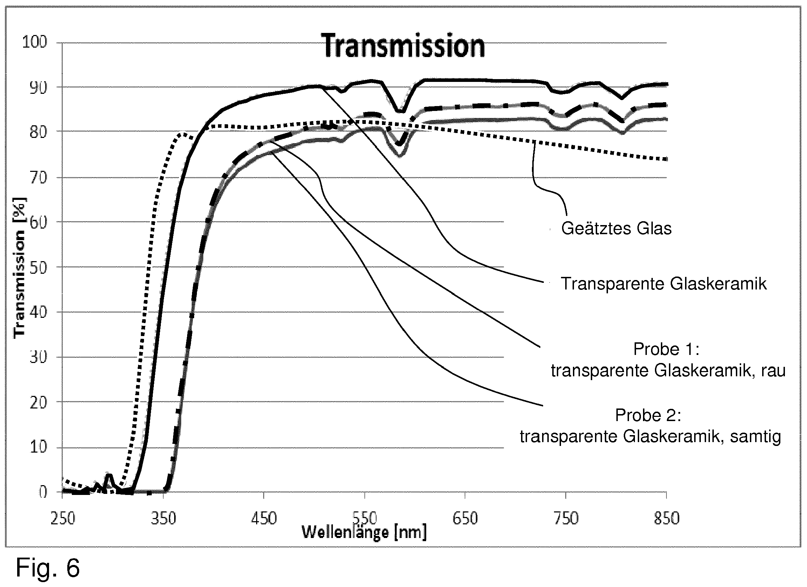

Wie anhand der Tabelle und Fig. 6 ersichtlich, ist die Transmission der erfindungsgemäß beschichteten Proben 1 und 2 ähnlich zu der eines geätzten Glases. Aufgrund der an der rauen Oberfläche entstehenden Streuung des Lichts ist die Transmission geringer als die einer unbeschichteten transparenten Glaskeramik und des Kalk-Natron-Glases.

Der Haze-Wert und der Glanz erfindungsgemäßer Proben unterscheiden sich dennoch deutlich von den Werten eines geätzten Glases. Der Haze-Wert ist geringer als bei geätztem Glas, der Glanz-Wert demgegenüber höher. Als Haze-Wert wird der Anteil des reflektierten und in einem kleinen Raumwinkelbereich um den Spiegelstrahl herum abgelenkten Lichts bezeichnet. Der Glanz-Wert ist demgegenüber der Anteil des entlang des Spiegelstrahls reflektierten Lichts.

Diese Eigenschaften führen zu einer anderen optischen Anmutung im Vergleich zu geätztem Glas. Während letzteres eher matt erscheint, führen der gegenüber geätztem Glas geringere Haze- und höhere Glanz-Wert erfindungsgemäßer Proben zu einer eher seidenglänzenden Anmutung.

Allgemein können in Weiterbildung der Erfindung, wie auch durch die beispielhaften Tabellenwerte gestützt, die Schichten hinsichtlich ihrer optischen Eigenschaften dahingehend charakterisiert werden, dass der Haze-Wert des an der Schicht reflektierten Lichts in einem Bereich zwischen 65% und 90% und/oder der Glanz-Wert zwischen 15% und 35% liegt.

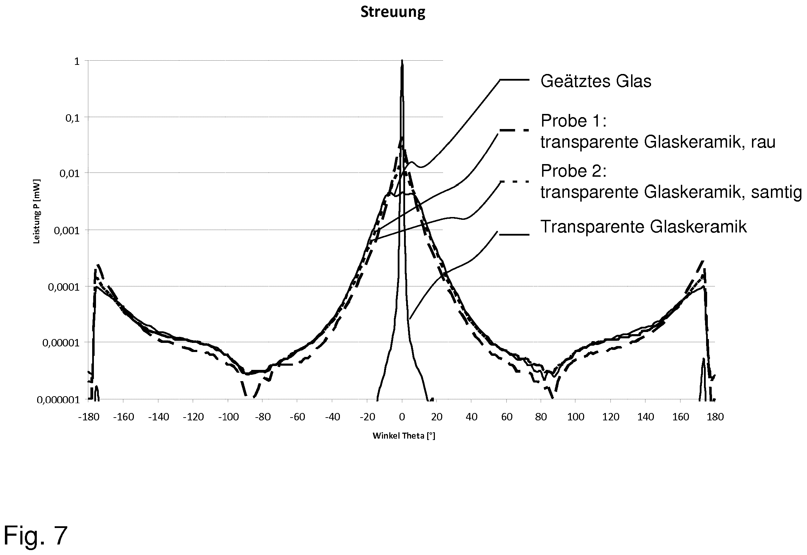

Wie anhand der Fig. 7 zu erkennen ist, unterscheiden sich die Verläufe der Streuung als Funktion des Streuwinkels für die Proben 1, 2 und des geätzten Glases zwar über einen weiten Winkelbereich nicht deutlich, so dass die optische Anmutung erfindungsgemäßer Substrate unter diffus gestreutem Licht durchaus Ähnlichkeiten zu einem geätzten Glas hat. Allerdings ergeben sich deutliche Unterschiede bei kleinen Streuwinkeln. Die Kurve des geätzten Glases zeigt im Bereich von etwa ±15° ein Plateau. Demgegenüber steigt die Lichtintensität bei den erfindungsgemäßen Proben 1 und 2 mit kleiner werdendem Streuwinkel weiter deutlich an und zeigen hier Ähnlichkeiten mit der Streukurve einer unbeschichteten Glaskeramik. Hierbei ist auch zu beachten, dass die Intensitätsskala in Fig. 7 logarithmisch ist.

Diese Eigenschaft ist von Vorteil, wenn leuchtende Anzeigeelemente, wie etwa LED-Betriebsanzeigen, unter einem beschichteten Bereich eines erfindungsgemäßen Substrats angeordnet werden. Die Lesbarkeit und Konturschärfe der Anzeige bleiben durch die Schicht im Wesentlichen erhalten. Demgegenüber wird das durch ein geätztes Glas transmittierte Licht im Bereich von ±10° gleichmäßig gestreut. Hierdurch wird die Erkennbarkeit der Konturen einer Anzeige zumindest stark eingeschränkt.

Gemäß einer Weiterbildung der Erfindung, ohne Beschränkung auf die Ausführungsbeispiele ist daher eine Vorrichtung mit einem erfindungsgemäßen beschichteten Substrat vorgesehen, wobei auf einer Seite des Substrats eine leuchtende Anzeige vorgesehen ist und zumindest der Bereich der Oberfläche des Substrats, welche der Anzeige abgewandt ist und der Anzeige gegenüberliegt, mit einer Schicht mit haptischen Eigenschaften versehen ist. Insbesondere kann es sich hier wiederum um ein Glaskeramik-Kochfeld mit einer transparenten Glaskeramik-Platte handeln, bei welcher die Oberseite mit der erfindungsgemäßen Schicht beschichtet ist und unter oder an der Unterseite der Glaskeramik-Patte ein Anzeigeelement angeordnet ist, so dass dieses im Betrieb durch die Schicht auf der Oberseite hindurchleuchtet.

Die Eigenschaft der Schicht, einen verglichen mit geätztem Glas größeren Anteil der Intensität von durch das Substrat transmittierten Lichts mit kleinem Streuwinkel abzulenken, kann gemäß noch einer Weiterbildung der Erfindung auch wie folgt quantifiziert werden: Das Verhältnis der Intensität von Licht, welches durch das Substrat und die Schicht transmittiert und unter einem Winkel von 0° hindurchtritt (also des nicht gestreuten Lichts), zur Intensität von Licht, welches durch das Substrat und die Schicht transmittiert und unter einem Winkel von 10° gestreut wird, beträgt mindestens 2, vorzugsweise mindestens 5. Zum Vergleich liegt, wie in Fig. 7 zu erkennen ist, dieses Verhältnis bei der geätzten Probe bei etwa 1. Die Intensität des unter 10° gestreuten Lichts ist hier also fast genau so groß wie die des unter 0° transmittierten Lichts.

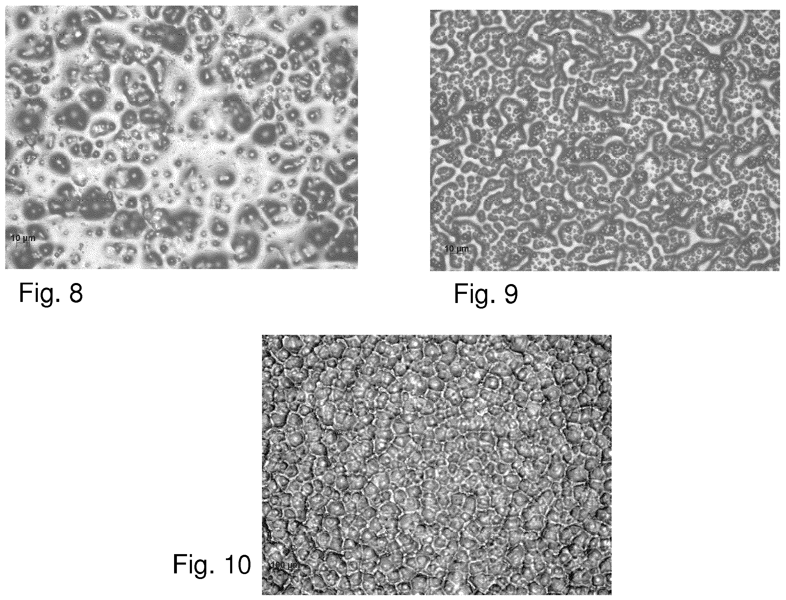

Die Fig. 8 und 9 schließlich zeigen lichtmikroskopische Aufnahmen der Proben erfindungsgemäßer beschichteter Substrate. Fig.8 zeigt eine Aufnahme der beschichteten Oberfläche der Probe 1 und Fig. 9 eine Aufnahme der beschichteten Oberfläche der Probe 2. Fig. 10 zeigt zum Vergleich eine Aufnahme der geätzten Oberfläche des geätzten Glases. In den lichtmikroskopischen Aufnahmen erscheint die geätzte Glasprobe in Fig. 10 am rauesten. Überraschend ist hier aber, dass beide erfindungsgemäßen Proben eine höhere Haftreibung zeigen, wie anhand der obige Tabelle ersichtlich ist. Gemäß noch einer Weiterbildung, ohne Beschränkung auf die in den Figuren gezeigten Ausführungsbeispiele können erfindungsgemäße beschichtete Substrate auch dadurch weiter charakterisiert werden, dass deren Haftreibwert mindestens 0,8 beträgt. Dabei sind der RMS- und Ra-Wert der Schichten deutlich kleiner als bei einem geätzten Glas. Diese Werte betragen bei beiden Proben höchstens ein Viertel der entsprechenden Werte eines geätzten Glases. Gemäß noch einer Weiterbildung der Erfindung, ohne Beschränkung auf die Ausführungsbeispiele können dabei die erfindungsgemäßen Schichten durch einen RMS-Wert und/oder einen Ra-Wert von höchstens 2 µm charakterisiert werden.

## Patentansprüche

1. Beschichtetes Glas oder Glaskeramik-Substrat mit einer lokalen und/oder vollflächigen Schicht mit haptischen Eigenschaften, derart, dass die Schicht eine haptisch fühlbare Struktur aufweist, wobei die Textur der Oberfläche des Substrates durch haptisches Wahrnehmen über die Integration aller Hautsinne und der Tiefensensibilität aktiv erfühlt werden kann, wobei die Schicht strukturgebende anorganische und oder Polysiloxan-basierte Partikel umfasst, welche mit einem Schicht-bildenden Material auf dem Substrat fixiert sind, wobei die Partikel Erhebungen auf der Schicht bewirken und damit die haptisch fühlbare Struktur hervorrufen, und wobei die Partikel eine abgerundete, kantenlose Außenkontur aufweisen, um eine samtige Wahrnehmung zu bewirken, und wobei gute haptische Wirkungen erreicht werden, wenn der PV-Wert für eine Schicht mit kantenlosen kugelförmigen Partikeln zwischen 4 - 10 µm, bevorzugt zwischen 6 - 10 µm, besonders bevorzugt zwischen 7,5 und 9,5 µm liegt, wobei der PV-Wert die mittlere Höhendifferenz zwischen dem tiefsten Punkt zwischen zwei Partikeln und dem höchsten Punkt auf einem dieser Partikel beschreibt.

2. Beschichtetes Substrat mit haptischer Oberfläche nach Anspruch 1, **dadurch gekennzeichnet, dass** es sich bei dem Schicht-bildenden Material um eine organische und/oder anorganische und oder polysiloxanbasierte und/oder Silazan-basierende und /oder Glas-basierende Schicht-bildende Matrix handelt.

3. Beschichtetes Substrat mit haptischer Oberfläche nach einem der vorstehenden Ansprüche **gekennzeichnet dadurch, dass** das Schicht-bildende Material eine Temperaturbeständigkeit größer 150 °C, bevorzugt größer 250 °C ganz besonders bevorzugt größer 500 °C aufweist.

4. Beschichtetes Substrat mit haptischer Oberfläche nach einem der vorstehenden Ansprüche, **dadurch gekennzeichnet, dass** die Schicht zumindest eines der folgenden Merkmale aufweist:
- der erkennbare Flächenbelegungsgrad der aus dem Schicht-bildenden Material herausstehenden strukturgebenden Partikel ist größer 5 %, bevorzugt größer 20 %, ganz besonders bevorzugt größer 30 %,
- das Volumenverhältnis von Schicht-bildendem Material zu strukturgebenden Partikeln ist größer 0,1, bevorzugt größer 0,2, ganz besonders bevorzugt größer 0,4,
- das Massenverhältnis von Schicht-bildendem Material zu strukturgebenden Partikeln liegt in einem Bereich von 20 bis 0,1, bevorzugt von 3 bis 0,25 und besonders bevorzugt von 1,8 bis 0,4,
- der mittlere Abstand der strukturgebenden Partikel, bezogen auf den Abstand von Partikelmittelpunkt zu Partikelmittelpunkt, ist kleiner als der 4 - fache, bevorzugt kleiner als der 2 - fach mittlere Partikeldurchmesser der strukturgebenden Partikel,
- die mittlere Schichtdicke beträgt zwischen 0,5 µm und 50 µm, bevorzugt zwischen 1 - 25 µm, ganz besonders bevorzugt 2 - 10 µm,
- die mittlere Schichtdicke beträgt an Stellen ohne strukturgebende Partikel zwischen 0,1 µm - 20 µm, bevorzugt zwischen 1 - 5 µm, ganz besonders bevorzugt 1,5 - 3 µm,
- die mittlere Schichtdicke des Schicht-bildenden Materials ist immer kleiner als der mittlere Durchmesser der strukturgebenden Partikel, bevorzugt kleiner als 80 % des mittleren Partikeldurchmessers.

5. Beschichtetes Substrat mit haptischer Oberfläche nach einem der vorstehenden Ansprüche, **dadurch gekennzeichnet dass** die strukturgebenden Partikel teilweise aus dem Schicht-bildenden Material herausragen und/oder zumindest teilweise nicht mit Schicht-bildendem Material bedeckt sind und/oder dass die strukturgebenden Partikel eine bestimmte Außenkontur aufweisen, umfassend kantenlose und/oder kugelförmige Außenkonturen.

6. Beschichtetes Substrat mit haptischer Oberfläche nach Anspruch (1), **dadurch gekennzeichnet, dass** die strukturgebenden Partikel Materialien aus der Gruppe der Gläser oder Polysiloxane, insbesondere SiO2, Phenylpolysiloxan, Methylpolysiloxan, Methylphenylpolysiloxan, organisch funktionalisierten Polysiloxane, alkaliarmen Borosilikat und/oder Alkali-Alumo-Silikatgläsern und/oder oxidische Materialien, insbesondere Al₂O₃, kristallines SiO₂, ZrO₂, ZrSiO₄ ZnAl₂O₄, MgAl₂O₄, Y₂O₃, Yttrium-dotiertes ZrO₂, Kalzium-dotiertes ZrO₂, Magnesium-dotiertes ZrO₂, TiO₂, ZnO umfassen.

7. Beschichtetes Substrat mit haptischer Oberfläche nach einem der vorstehenden Ansprüche, **dadurch gekennzeichnet, dass** die strukturgebenden Partikel einen Erweichungsbereich unterhalb oder im Bereich einer Einbrenntemperatur des Schicht-bildenden Materials aufweisen.

8. Beschichtetes Substrat mit haptischer Oberfläche nach einem der vorstehenden Ansprüche **gekennzeichnet durch** eine Reflexion bei 550 nm von 6 - 9 % bevorzugt von 7 - 8%, und/oder eine Transmission bei 550 nm von 75 - 85 % bevorzugt von 80 - 85 %, besonders bevorzugt von 81 - 83.

9. Beschichtetes Substrat mit haptischer Oberfläche nach einem der vorstehenden Ansprüche, **dadurch gekennzeichnet, dass** das Schicht-bildende Material aus einem Glas besteht, **gekennzeichnet durch** die Zusammensetzung (in Gew.-%) von:
| | |
|---|---|
| Li₂O | 0 - 10 |
| Na₂O | 0 - 10 |
| K₂O | 0 - 10 |
| MgO | 0 - 5 |
| CaO | 0 - 5 |
| SrO | 0 - 4 |
| BaO | 0 - 24 |
| ZnO | 0 - 15 |
| B₂O₃ | 0 - 29 |
| Al₂O₃ | 0 - 25 |
| SiO₂ | 44 - 73 |
| TiO₂ | 0 - 5 |
| ZrO₂ | 0 - 7 |
| As₂O₃ | 0 - 1 |
| Sb₂O₃ | 0 - 15 |
| F | 0 - 3 |
oder durch eine Zusammensetzung (in Gew.-%) von:
| | |
|---|---|
| SiO₂ | 35 - 65 |
| Al₂O₃ | 3 - 18 |
| B₂O₃ | 5 - 25 |
| Li₂O | 0 - 12 |
| Na₂O | 0 - 18 |
| K₂O | 0 - 18 |
| CaO | 0 - 17 |
| MgO | 0 - 12 |
| BaO | 0 - 38 |
| SrO | 0 - 16 |
| ZnO | 0 - 38 |
| TiO₂ | 0 - 5 |
| ZrO₂ | 0 - 3 |
| Bi₂O₃ | 0 |
| CoO | 0 |
| Fe₂O₃ | 0 |
| MnO | 0 |
| CeO₂ | 0 |
| F | 0 |
oder durch eine Zusammensetzung (in Gew.-%) von:
| | |
|---|---|
| SiO₂ | 6 - 20 |
| Al₂O₃ | 0 - 5 |
| B₂O₃ | 20 - 38 |
| Li₂O | 0 - 2 |
| Na₂O | 0 - 2 |
| K₂O | 0 - 2 |
| CaO | 0 - 2 |
| MgO | 0 - 2 |
| BaO | 0 - 2 |
| SrO | 0 - 2 |
| ZnO | 35 - 70 |
| TiO₂ | 0 - 5 |
| ZrO₂ | 0 - 5 |
| Bi₂O₃ | 0 - 20 |
| CoO | 0 - 5 |
| Fe₂O₃ | 0 - 5 |
| MnO | 0 - 10 |
| CeO₂ | 0 - 2 |
| F | 0 - 6 |

10. Beschichtetes Substrat mit haptischer Oberfläche nach einem der vorstehenden Ansprüche, **dadurch gekennzeichnet, dass** das Substrat ein Küchenelement aus Glas oder Glaskeramik ist und die Schicht mit strukturgebenden Partikel eine Bedruckung des Küchenelementes darstellt.

11. Beschichtetes Substrat mit haptischer Oberfläche nach einem der vorstehenden Ansprüche, **gekennzeichnet dadurch, dass** die Schicht eine lokale und oder vollflächige Bedruckung für eine volumengefärbte und/oder farbig beschichtete Glaskeramikkochfläche für Strahlungsheizkörper und oder Gaskochgeräte und oder Induktionsgeräte darstellt.

12. Beschichtetes Substrat mit haptischer Oberfläche nach einem der vorstehenden Ansprüche, **dadurch gekennzeichnet, dass** der Haze-Wert des an der Schicht reflektierten Lichts in einem Bereich zwischen 65% und 90% und/oder der Glanz-Wert des an der Schicht reflektierten Lichts zwischen 15% und 35% liegt.

13. Beschichtetes Substrat mit haptischer Oberfläche nach einem der vorstehenden Ansprüche, **dadurch gekennzeichnet, dass** das Verhältnis der Intensität von Licht, welches durch das Substrat und die Schicht transmittiert und unter einem Winkel von 0° hindurchtritt zur Intensität von Licht, welches durch das Substrat und die Schicht transmittiert und unter einem Winkel von 10° gestreut wird, mindestens 2, vorzugsweise mindestens 5 beträgt.

14. Glaskeramik-Kochfeld umfassend ein beschichtetes Substrat mit haptischer Oberfläche nach einem der vorstehenden Ansprüche, wobei das Substrat eine transparente Glaskeramik-Platte ist, bei welcher die Oberseite mit der Schicht mit haptischen Eigenschaften beschichtet ist, wobei unter oder an der Unterseite der Glaskeramik-Patte ein Anzeigeelement angeordnet ist, so dass dieses im Betrieb durch die Schicht auf der Oberseite hindurchleuchtet.

## Claims

1. A coated glass or glass ceramic substrate comprising a local or full-surface layer with haptic properties such that the layer has a haptically perceptible texture, wherein the texture of the substrate surface can be actively sensed through haptic perception by integrating all skin senses and depth sensitivity, wherein said layer comprises texturing inorganic and/or polysiloxane-based particles which are fixed on the substrate by a layer-forming material, wherein said particles cause protrusions on the layer and thus produce the haptically perceptible texture, and wherein the particles have a rounded, edgeless outer contour so as to bring about a velvety perception, and wherein good haptic properties are achieved when the PV value for a layer that includes edgeless spherical particles ranges from 4 to 10 µm, preferably from 6 to 10 µm, most preferably from 7.5 to 9.5 µm, wherein the PV value defines the mean height differential between the deepest point between two particles and the highest point on one of these particles.

2. The coated substrate with haptic surface according to claim 1, **characterised in that** said layer-forming material is an organic and/or inorganic and/or polysiloxane-based and/or silazane-based and/or glass-based layer-forming matrix,

3. The coated substrate with haptic surface according to any one of the preceding claims, **characterised in that** said layer-forming material exhibits a temperature resistance of more than 150 °C, preferably more than 250 °C, most preferably more than 500 °C.

4. The coated substrate with haptic surface according to any one of the preceding claims, **characterised in that** the layer exhibits at least one of the following features:
- the visible percentage of surface coverage of the texturing particles protruding from the layer-forming material is greater than 5 %, preferably greater than 20 %, most preferably greater than 30 %;
- the volume ratio of layer-forming material to texturing particles is greater than 0.1, preferably greater than 0.2, most preferably greater than 0.4;
- the mass ratio of layer-forming material to texturing particles ranges from 20 to 0.1, preferably from 3 to 0.25, and most preferably from 1.8 to 0.4;
- the average spacing of texturing particles, based on the spacing from particle centre to particle centre, is smaller than 4 times, preferably smaller than 2 times the mean particle diameter of the texturing particles;
- the average layer thickness is between 0.5 µm and 50 µm, preferably between 1 µm and 25 µm, most preferably between 2 µm and 10 µm;
- at locations without texturing particles, the average layer thickness is between 0.1 µm and 20 µm, preferably between 1 µm and 5 µm, most preferably between 1.5 µm and 3 µm.
- the average layer thickness of the layer-forming material is always smaller than the mean diameter of the texturing particles, preferably smaller than 80 % of the mean particle diameter.

5. The coated substrate with haptic surface according to any one of the preceding claims, **characterised in that** the texturing particles partially protrude from the layer-forming material and/or are at least partially not covered with layer-forming materia!, and/or that the texturing particles have a specific outer contour including edgeless and/or spherical outer contours.

6. The coated substrate with haptic surface according to claim 1, **characterised in that** the texturing particles comprise materials from the group of glasses or polysiloxanes, in particular SiO₂, phenylpolysiloxane, methylpolysiloxane, methylphenylpolysiloxane, organically functionalized polysiloxanes, low-alkali borosilicate and/or alkali aluminosilicate glasses, and/or oxidic materials, in particular Al₂O₃, crystalline SiO₂, ZrO₂, ZrSiO₄, ZnAl₂O₄, MgAl₂O₄, Y₂O₃, yttrium-doped ZrO₂, calcium-doped ZrO₂, magnesium-doped ZrO₂, TiO₂, ZnO.

7. The coated substrate with haptic surface according to any one of the preceding claims, **characterised in that** the texturing particles have a softening range below or around a firing temperature of the layer-forming material

8. The coated substrate with haptic surface according to any one of the preceding claims, **characterized by** a reflectance at 550 nm from 6 to 9 %, preferably from 7 to 8 %, and/or by a transmittance at 550 nm from 75 to 85 %, preferably from 80 to 85 %, most preferably from 81 to 83 %.

9. The coated substrate with haptic surface according to any one of the preceding claims, **characterised in that** the layer-forming material is made of a glass, **characterized by** the composition (in wt%) of:
| | |
|---|---|
| Li₂O | 0 - 10 |
| Na₂O | 0 - 10 |
| K₂O | 0 - 10 |
| MgO | 0 - 5 |
| CaO | 0 - 5 |
| SrO | 0 - 4 |
| BaO | 0 - 24 |
| ZnO | 0 - 15 |
| B₂O₃ | 0 - 29 |
| Al₂O₃ | 0 - 25 |
| SiO₂ | 44 - 73 |
| TiO₂ | 0 - 5 |
| ZrO₂ | 0 - 7 |
| As₂O₃ | 0 - 1 |
| Sb₂O₃ | 0 - 15 |
| F | 0 - 3 |
or by a composition (in wt%) of:
| | |
|---|---|
| SiO₂ | 35 - 65 |
| Al₂O₃ | 3 - 18 |
| B₂O₃ | 5 - 25 |
| Li₂O | 0 - 12 |
| Na₂O | 0 - 18 |
| K₂O | 0 - 18 |
| CaO | 0 - 17 |
| MgO | 0 - 12 |
| BaO | 0 - 38 |
| SrO | 0 - 16 |
| ZnO | 0 - 38 |
| TiO₂ | 0 - 5 |
| ZrO₂ | 0 - 3 |
| Bi₂O₃ | 0 |
| CoO | 0 |
| Fe₂O₃ | 0 |
| MnO | 0 |
| CeO₂ | 0 |
| F | 0 |
or by a composition (in wt%) of:
| | |
|---|---|
| SiO₂ | 6 - 20 |
| Al₂O₃ | 0 - 5 |
| B₂O₃ | 20 - 38 |
| Li₂O | 0 - 2 |
| Na₂O | 0 - 2 |
| K₂O | 0 - 2 |
| CaO | 0 - 2 |
| MgO | 0 - 2 |
| BaO | 0 - 2 |
| SrO | 0 - 2 |
| ZnO | 35 - 70 |
| TiO₂ | 0 - 5 |
| ZrO₂ | 0 - 5 |
| Bi₂O₃ | 0 - 20 |
| CoO | 0 - 5 |
| Fe₂O₃ | 0 - 5 |
| MnO | 0 - 10 |
| CeO₂ | 0 - 2 |
| F | 0 - 6 |

10. The coated substrate with haptic surface according to any one of the preceding claims, **characterised in that** the substrate is a kitchen element made of glass or glass ceramics, and that the layer with texturing particles is a printing on said kitchen element.

11. The coated substrate with haptic surface according to any one of the preceding claims, **characterised in that** the layer is a local or full-surface printing for a volume-coloured and/or colour-coated glass ceramic cooktop panel for radiant heaters and/or gas cookers and/or induction cookers.

12. The coated substrate with haptic surface according to any one of the preceding claims, **characterised in that** the haze value of the light reflected at the layer is in a range between 65 % and 90 %, and/or that the gloss value of the light reflected at the layer is between 15 % and 35 %.

13. The coated substrate with haptic surface according to any one of the preceding claims, **characterised in that** the ratio of the intensity of light transmitted through the substrate and the layer and passing at an angle of 0° to the intensity of light transmitted through the substrate and the layer and scattered at an angle of 10°, is at least 2, preferably at least 5.

14. A glass ceramic cooktop, comprising a coated substrate with haptic surface according to any one of the preceding claims, wherein the substrate is a transparent glass ceramic panel, which has its upper surface coated with said layer having haptic properties, wherein a display element is arranged below or on the lower surface of the glass ceramic panel such that, in operation, it shines through the layer on the upper surface.

## Revendications

1. Substrat en verre ou vitrocéramique revêtu, comprenant une couche locale et/ou appliquée sur toute la surface et dotée de propriétés haptiques, de telle sorte que la couche présente une structure à perception haptique, la texture de la surface du substrat pouvant être explorée activement à travers la perception haptique, par le biais de l'intégration de l'ensemble des sensations cutanées et de la sensibilité en profondeur, la couche comportant des particules structurantes inorganiques et/ou à base de polysiloxane, qui sont fixées au substrat à l'aide d'un matériau de formation de couche, les particules formant des reliefs sur la couche et créant ainsi la structure perceptible sur le plan haptique, et les particules présentant un contour extérieur arrondi sans arêtes pour obtenir un toucher velouté, et des effets haptiques avantageux étant obtenus lorsque la valeur PV pour une couche comportant des particules sphériques sans arêtes est comprise entre 4 et 10 µm, de préférence entre 6 et 10 µm, et de manière particulièrement avantageuse entre 7,5 et 9,5 µm, la valeur PV décrivant la différence de hauteur moyenne entre le point le plus bas entre deux particules et le point le plus haut sur l'une de ces particules.

2. Substrat revêtu à surface haptique selon la revendication 1, **caractérisé en ce que** le matériau de formation de couche est constitué d'une matrice de formation de couche organique et/ou inorganique et/ou à base de polysiloxane et/ou à base de silazane et/ou à base de verre.

3. Substrat revêtu à surface haptique selon l'une des revendications précédentes, **caractérisé en ce que** le matériau de formation de couche présente une résistance aux températures supérieures à 150 °C, de préférence supérieures à 250 °C, et de manière particulièrement avantageuse supérieures à 500 °C.

4. Substrat revêtu à surface haptique selon l'une des revendications précédentes, **caractérisé en ce que** la couche présente au moins l'une des propriétés suivantes :
- le degré d'occupation de surface perceptible des particules structurantes dépassant du matériau de formation de couche est supérieur à 5 %, de préférence supérieur à 20 %, et de manière particulièrement avantageuse supérieur à 30 %,
- le rapport volumique entre le matériau de formation de couche et les particules structurantes est supérieur à 0,1, de préférence supérieur à 0,2, et de manière particulièrement avantageuse supérieur à 0,4,
- le rapport de masse entre le matériau de formation de couche et les particules structurantes est compris dans une plage allant de 20 à 0,1, de préférence de 3 à 0,25, et de manière particulièrement avantageuse de 1,8 à 0,4,
- l'espacement moyen des particules structurantes, rapporté à l'espacement de centre de particule à centre de particule, est inférieur à 4 fois, de préférence inférieur à 2 fois le diamètre de particule moyen des particules structurantes,
- l'épaisseur de couche moyenne est comprise entre 0,5 µm et 50 µm, de préférence entre 1 et 25 µm, et de manière particulièrement avantageuse entre 2 et 10 µm,
- l'épaisseur de couche moyenne, aux emplacements dépourvus de particules structurantes, est comprise entre 0,1 µm et 20 µm, de préférence entre 1 et 5 µm, et de manière particulièrement avantageuse entre 1,5 et 3 µm,
- l'épaisseur de couche moyenne du matériau de formation de couche est toujours inférieure au diamètre moyen des particules structurantes, de préférence inférieure à 80 % du diamètre de particule moyen.

5. Substrat revêtu à surface haptique selon l'une des revendications précédentes, **caractérisé en ce que** les particules structurantes dépassent en partie du matériau de formation de couche et/ou ne sont du moins en partie pas recouvertes par le matériau de formation de couche, et/ou **en ce que** les particules structurantes présentent un contour extérieur défini, englobant des contours extérieurs sans arêtes et/ou sphériques.

6. Substrat revêtu à surface haptique selon la revendication (1), **caractérisé en ce que** les particules structurantes englobent des matériaux du groupe des verres ou des polysiloxanes, en particulier Si02, phényl-polysiloxane, méthyl-polysiloxane, méthyl-phényl-polysiloxane, des polysiloxanes à fonctionnalisation organique, des verres au borosilicate pauvres en alcalins et/ou des verres au silicate d'aluminium alcalins et/ou des matériaux oxydiques, en particulier Al₂0₃, Si0₂ cristallin, Zr0₂, ZrSiO₄, ZnAl₂O₄, MgAl₂O₄, Y₂O₃, ZrO₂ dopé à l'yttrium, ZrO₂ dopé au calcium, ZrO₂ dopé au magnésium, TiO₂, ZnO.

7. Substrat revêtu à surface haptique selon l'une des revendications précédentes, **caractérisé en ce que** les particules structurantes présentent un domaine de ramollissement qui se situe au-dessous ou aux alentours d'une température de cuisson du matériau de formation de couche.

8. Substrat revêtu à surface haptique selon l'une des revendications précédentes, **caractérisé en ce qu'**il présente une réflexion, à 550 nm, allant de 6 à 9 %, de préférence de 7 à 8 %, et/ou une transmission, à 550 nm, allant de 75 à 85 %, de préférence de 80 à 85 %, et de manière particulièrement avantageuse de 81 à 83.

9. Substrat revêtu à surface haptique selon l'une des revendications précédentes, **caractérisé en ce que** le matériau de formation de couche est constitué d'un verre **caractérisé par** la composition suivante (en % en poids) :
| | |
|---|---|
| Li₂O | 0 à 10 |
| Na₂O | 0 à 10 |
| K₂O | 0 à 10 |
| MgO | 0 à 5 |
| CaO | 0 à 5 |
| SrO | 0 à 4 |
| BaO | 0 à 24 |
| ZnO | 0 à 15 |
| B₂O₃ | 0 à 29 |
| Al₂O₃ | 0 à 25 |
| SiO₂ | 44 à 73 |
| TiO₂ | 0 à 5 |
| ZrO₂ | 0 à 7 |
| As₂O₃ | 0 à 1 |
| Sb₂O₃ | 0 à 15 |
| F | 0 à 3 |
ou par la composition suivante (en % en poids) :
| | |
|---|---|
| SiO₂ | 35 à 65 |
| Al₂O₃ | 3 à 18 |
| B₂O₃ | 5 à 25 |
| Li₂O | 0 à 12 |
| Na₂O | 0 à 18 |
| K₂O | 0 à 18 |
| CaO | 0 à 17 |
| MgO | 0 à 12 |
| BaO | 0 à 38 |
| SrO | 0 à 16 |
| ZnO | 0 à 38 |
| TiO₂ | 0 à 5 |
| ZrO₂ | 0 à 3 |
| Bi₂O₃ | 0 |
| CoO | 0 |
| Fe₂O₃ | 0 |
| MnO | 0 |
| CeO₂ | 0 |
| F | 0 |
ou par la composition suivante (en % en poids) :
| | |
|---|---|
| SiO₂ | 6 à 20 |
| Al₂O₃ | 0 à 5 |
| B₂O₃ | 20 à 38 |
| Li₂O | 0 à 2 |
| Na₂O | 0 à 2 |
| K₂O | 0 à 2 |
| CaO | 0 - 2 |
| MgO | 0 à 2 |
| BaO | 0 à 2 |
| SrO | 0 à 2 |
| ZnO | 35 à 70 |
| TiO₂ | 0 à 5 |
| ZrO₂ | 0 à 5 |
| Bi₂O₃ | 0 à 20 |
| CoO | 0 à 5 |
| Fe₂O₃ | 0 à 5 |
| MnO | 0 à 10 |
| CeO₂ | 0 à 2 |
| F | 0 à 6 |

10. Substrat revêtu à surface haptique selon l'une des revendications précédentes, **caractérisé en ce que** le substrat est un élément de cuisine en verre ou vitrocéramique et la couche comportant des particules structurantes représente une impression de l'élément de cuisine.

11. Substrat revêtu à surface haptique selon l'une des revendications précédentes, **caractérisé en ce que** la couche représente une impression locale et/ou appliquée sur toute la surface pour un plan de cuisson en vitrocéramique teinté dans la masse et/ou à revêtement teinté, destiné à des corps chauffants rayonnants et/ou des appareils de cuisson au gaz et/ou des appareils à induction.

12. Substrat revêtu à surface haptique selon l'une des revendications précédentes, **caractérisé en ce que** la valeur Haze de la lumière réfléchie sur la couche se situe dans une plage comprise entre 65 % et 90 % et/ou la valeur de brillance de la lumière réfléchie sur la couche est comprise entre 15 % et 35 %.

13. Substrat revêtu à surface haptique selon l'une des revendications précédentes, **caractérisé en ce que** le rapport entre l'intensité de la lumière qui est transmise à travers le substrat et la couche, en les traversant sous un angle de 0°, et l'intensité de la lumière qui est transmise à travers le substrat et la couche, en étant dispersée sous un angle de 10°, est au moins de 2, de préférence au moins de 5.

14. Table de cuisson en vitrocéramique comprenant un substrat revêtu à surface haptique selon l'une des revendications précédentes, dans laquelle le substrat est une plaque en vitrocéramique transparente dont la surface est revêtue de la couche dotée de propriétés haptiques, un élément d'affichage étant disposé sous ou contre la face inférieure de la plaque vitrocéramique, de manière à ce que lors du fonctionnement, il éclaire à travers la couche se trouvant sur la face supérieure.
